# EUROPEAN PATENT APPLICATION

(11) **EP 4 701 107 A1**
(43) Date of publication of application: **25.02.2026**
(21) Application number: 23942858.4
(22) Date of filing: 29.06.2023
(51) Int. Cl.: H04L 1/00

(54) **DATA PROCESSING METHOD AND CORRESPONDING APPARATUS**

(71) Applicant: Huawei Technologies Co., Ltd., Shenzhen, Guangdong 518129 (CN)
(72) Inventor: ZHANG, Gongzheng, Shenzhen, Guangdong 518129 (CN); WANG, Jian, Shenzhen, Guangdong 518129 (CN); XU, Chen, Shenzhen, Guangdong 518129 (CN); LI, Rong, Shenzhen, Guangdong 518129 (CN)
(74) Representative: Maiwald GmbH
(86) International application number: PCT/CN2023/103855
(87) International publication number: WO 2025/000346

(57) **Abstract**

This application discloses a data processing method, which may be applied to a neural network-based communication scenario. The method includes: A first apparatus that serves as a sender may send a distance between two pieces of data to a second apparatus that serves as a receiver, where the two pieces of data may be data obtained after source data is processed by using a transmitter neural network, and data that has a reference function. Because same data is used as a reference, a distance between data output by a transmitter neural network of the first apparatus and the data that has the reference function and a distance between data output by a transmitter neural network of the second apparatus and the data that has the reference function are usually close. In this way, after the data that has the reference function is introduced, a receiver neural network of the second apparatus can correctly receive data processed by using the transmitter neural network of the first apparatus. In this way, even if the transmitter neural network of the first apparatus and the receiver neural network of the second apparatus are not neural networks that are jointly trained, normal communication can still be performed, so that adaptability of communication between neural networks that are not jointly trained is improved.

## Description

### TECHNICAL FIELD

This application relates to the field of communication technologies, and specifically, to a data processing method and a corresponding apparatus.

### BACKGROUND

A neural network-based transmitter and receiver may be configured for physical layer signal processing, for example, symbol modulation and demodulation, channel encoding and decoding, pilot and channel estimation, and compression and reconstruction of channel state information.

Joint training of neural networks of the transmitter and the receiver may achieve better communication performance. However, different vendors are usually unwilling to disclose trained neural networks of receivers/transmitters. As a result, the transmitters and the receivers of the different vendors have poor adaptability during communication.

Therefore, how to implement adaptive communication between the transmitters and the receivers of the different vendors without disclosing the neural networks of the transmitters/receivers of the vendors becomes an urgent problem to be resolved.

### SUMMARY

This application provides a data processing method, to improve adaptability of communication between a transmitter and a receiver. This application further provides a corresponding communication apparatus, a computer-readable storage medium, a computer program product, and the like.

A first aspect of this application provides a data processing method, including: A first apparatus obtains first data and second data, where the first data is data obtained after to-be-sent source data is processed by using a transmitter neural network of the first apparatus, and the second data is data that has a reference function for the first data. The first apparatus sends information about a first distance to a second apparatus, where the first distance is obtained by using the first data and the second data, and the first distance is used by the second apparatus to restore the source data.

In this application, the first apparatus and the second apparatus may be devices, or may be chips (systems) in the devices. The first apparatus includes the transmitter neural network, and may further include a receiver neural network. The second apparatus includes a receiver neural network, and may further include a transmitter neural network. The transmitter neural network and the receiver neural network are relative. For example, the transmitter neural network of the first apparatus/the transmitter neural network of the second apparatus may be a neural network used for encoding, and the receiver neural network of the first apparatus/the receiver neural network of the second apparatus may be a neural network used for decoding. The transmitter neural network of the first apparatus/the transmitter neural network of the second apparatus may be a neural network used for signal modulation, and the receiver neural network of the first apparatus/the receiver neural network of the second apparatus may be a neural network used for signal demodulation. The transmitter neural network of the first apparatus/the transmitter neural network of the second apparatus may be a neural network used for compression, and the receiver neural network of the first apparatus/the receiver neural network of the second apparatus may be a neural network used for decompression.

In this application, the data may also be expressed as a signal, a symbol, or a bit, which is merely a different form of expression and is essentially data.

In this application, that the first apparatus obtains the first data and the second data may be that the first apparatus generates (or obtains through calculation or operation) the first data and the second data by using the transmitter neural network.

In this application, the first distance is obtained by using the first data and the second data. It indicates that the first distance may be a distance between the first data and the second data, or may be a distance between two pieces of data obtained after the first data and the second data are processed. The first distance may be a distance represented by a cosine similarity, a mean square error, a projection, a Hamming distance, a Euclidean distance, a standard Euclidean distance, a Manhattan distance, or the like.

In this application, the sending/receiver neural network of the first apparatus is obtained through joint training, and the sending/receiver neural network of the second apparatus is obtained through joint training. However, the first apparatus and the second apparatus usually separately train neural networks. Therefore, the receiver neural network of the second apparatus usually cannot normally receive data processed by using the transmitter neural network of the first apparatus. However, using same data as a reference, a distance between data output by the transmitter neural network of the first apparatus and the data that has the reference function and a distance between data output by the transmitter neural network of the second apparatus and the data that has the reference function are usually close. In this way, after the data that has the reference function is introduced, the receiver neural network of the second apparatus can correctly receive the data processed by using the transmitter neural network of the first apparatus, so that adaptability of communication between the first apparatus and the second apparatus is improved.

In a possible implementation, the first distance is the distance between the first data and the second data.

In the possible implementation, the first distance is directly determined by using the first data and the second data. If the second data is used as a coordinate basis, the first data may be a relative representation on the coordinate basis. For example, the first distance may be obtained by calculating a cosine similarity between the first data and the second data. If the to-be-sent source data of the first apparatus is represented as (x), the data obtained after the to-be-sent source data is processed by using the transmitter neural network of the first apparatus may be represented as (f1(x)). If the second data is represented as RD, the first distance may be represented as d((f1(x)), RD). In this application, the first distance is obtained by directly calculating the distance between the first data and the second data, so that communication efficiency can be improved.

In a possible implementation, the first distance is a distance between data obtained after the first data and the second data are separately processed by using an adaptation model, and the adaptation model is obtained by the first apparatus and the second apparatus through collaborative training based on a first training target or a second training target. The first training target indicates to reduce an absolute value of a difference between a second distance and a third distance, where the second distance is a distance between data obtained after first sample data and second sample data both are separately processed by using the transmitter neural network of the first apparatus and the adaptation model, and the third distance is a distance between data obtained after the first sample data and the second sample data are separately processed by using the transmitter neural network of the second apparatus. Alternatively, the second distance is a distance between data obtained after first sample data is processed by using the transmitter neural network of the first apparatus and the adaptation model and data obtained after the first sample data is processed by using a shared neural network and the adaptation model, and the third distance is a distance between data obtained after the first sample data is processed by using the transmitter neural network of the second apparatus and data obtained after the first sample data is processed by using the shared neural network. The second training target indicates to reduce an absolute value of a difference between restored data and the first sample data, and the restored data is data restored after the receiver neural network of the second apparatus processes the second distance.

In this application, the shared neural network may be a neural network that is configured outside the first apparatus and the second apparatus and that can be used by both the first apparatus and the second apparatus, or may be a same neural network that is configured in each of the first apparatus and the second apparatus.

In this application, data obtained after the first data is processed by using the adaptation model may be represented as (t1(f1(x))). Data obtained after the second data is processed by using the adaptation model may be represented as (t1(RD)). In this case, the first distance may be represented as d((t1(f1(x))), (t1(RD))).

In this application, the first training target may be the second distance being as close as possible to the third distance.

In a case, the second distance may be a distance d((tl(fl(xl))), (tl(fl(x2)))) between two pieces of data (t1(f1(x1))) and (t1(f1(x2))) obtained by processing the first sample data x1 and the second sample data x2 by using the transmitter neural network f1 of the first apparatus and the adaptation model t1. The third distance may be a distance d((f2(x1)), (f2(x2))) of two pieces of data (f2(x1)) and (f2(x2)) obtained by processing the first sample data x1 and the second sample data x2 by using the transmitter neural network f2 of the second apparatus. In this case, the second distance is as close as possible to the third distance, that is, d((t1(f1(x1))), (t1(f1(x2))))≈d((f2(x1)), (f2(x2))).

In another case, the second distance may be a distance d((t1(f1(x1))), (t1(s1(x1)))) between data (t1(f1(x1))) obtained after the first sample data (x1) is processed by using the transmitter neural network f1 of the first apparatus and the adaptation model t1 and data (tl(sl(xl))) obtained after the first sample data (x1) is processed by using a shared neural network s1 and the adaptation model t1. The third distance is a distance d((f2(x1)), (s2(x1))) between data (f2(x1)) obtained after the first sample data (x1) is processed by using the transmitter neural network of the second apparatus and data (s2(x1)) obtained after the first sample data (x1) is processed by using a shared neural network s2 of the second apparatus. In this case, the second distance is as close as possible to the third distance, that is, d((t1(f1(x1))), (t1(s1(x1))))≈d((f2(x1)), (s2(x1))), where s1 and s2 are the same.

In this application, the second training target may be data g2(d((t1(f1(x1))), (t1(f1(x2))))) restored after the receiver neural network of the second apparatus processes the second distance being as close as possible to x1, that is, g2(d((t1(f1(x1))), (t1(f1(x2)))))≈x1.

In the possible implementation, after the adaptation model is added to the first apparatus, the adaptability of the communication between the first apparatus and the second apparatus is further improved.

In a possible implementation, the second data is obtained by processing anchor data by using the transmitter neural network of the first apparatus. If the anchor data is represented as (x0), the second data RD may be represented as (f1(x0)).

In this application, the anchor data is included in shared data, and the second data that has the reference function can be quickly obtained by using the anchor data. The shared data refers to data shared by the first apparatus and the second apparatus. The shared data may be stored in both the first apparatus and the second apparatus, or may be stored in storage space of a third party, and both the first apparatus and the second apparatus may obtain the shared data from the storage space of the third party. In this application, obtaining the second data by using the anchor data can improve communication accuracy.

In a possible implementation, before the first apparatus obtains the first data and the second data, the method further includes: The first apparatus receives a parameter indication from the second apparatus, where the parameter indication indicates an amount of the anchor data and/or identification information of the anchor data, and the anchor data is included in the shared data. The first apparatus determines the anchor data from the shared data based on the parameter indication, and the second data is obtained after the anchor data is processed by using the transmitter neural network of the first apparatus.

In this application, the second sample data used for training the adaptation model is included in the shared data.

In the possible implementation, the second apparatus may notify, by using the parameter indication, the first apparatus of the anchor data that should be used. This helps the second apparatus better receive the source data, and helps improve a communication effect between the first apparatus and the second apparatus.

In a possible implementation, before the first apparatus obtains the first data and the second data, the method further includes: The first apparatus determines the anchor data from the shared data based on a transmission parameter, where the second data is obtained by processing the anchor data by using the transmitter neural network of the first apparatus, and the transmission parameter is used to determine an amount of the anchor data.

In the possible implementation, the transmission parameter may include, for example, a quantization bit quantity b and a quantization bit width B of each element. Based on the transmission parameter, a quantity of anchors may be determined, and appropriate anchor data may be selected. The anchor data may be selected in a manner of reading from the shared data in sequence. In this application, the anchor data is selected by using the transmission parameter, so that a speed of selecting the anchor data can be improved.

In a possible implementation, the method further includes: The first apparatus updates the shared data based on an update indication for the shared data.

In the possible implementation, the update indication may be mutually sent between the first apparatus and the second apparatus, or may be sent by another apparatus to the first apparatus or the second apparatus. Through management of the shared data, the anchor data may be selected by using latest shared data. This helps improve a communication effect between the first apparatus and the second apparatus.

In a possible implementation, the shared data is used to train the transmitter neural network of the first apparatus and/or the adaptation model.

In the possible implementation, the shared data may be used for training of the sending/receiver neural network of the first apparatus and/or the adaptation model, or may be used for training of the sending/receiver neural network of the second apparatus. In this way, the communication effect between the first apparatus and the second apparatus is improved.

In a possible implementation, the second data is data obtained after the source data is processed by using the shared neural network, and the shared neural network is a neural network configured in each of the first apparatus and the second apparatus.

In the possible implementation, the source data (x) may alternatively be processed by using the shared neural network, and the second data may also be obtained. In this way, the anchor data (x0) does not need to be introduced, and the first apparatus and the second apparatus can also correctly communicate with each other.

In a possible implementation, there are a plurality of first distances, and the information about the first distance is information obtained after quantization processing is performed on one or more first distances.

In the possible implementation, when a quantity of the first distances is large, not all of the first distances may be transmitted. In this case, a quantity of first distances that matches a capability of the transmission parameter may be selected by using the transmission parameter for quantization transmission. In this way, a quantity of invalid quantizations can be reduced, resource waste can be reduced, and the communication efficiency can be improved.

A second aspect of this application provides a data processing method, including: A second apparatus receives information about a first distance from a first apparatus, where the first distance is obtained by using first data and second data, the first data is data obtained after source data of the first apparatus is processed by using a transmitter neural network, and the second data is data that has a reference function for the first data. The second apparatus restores the source data from the first distance by using a receiver neural network.

In this application, even if the sending/receiver neural network of the first apparatus and the sending/receiver neural network of the second apparatus are independently trained, because the data that has the reference function is introduced to the first apparatus and the second apparatus, the receiver neural network of the second apparatus can correctly receive data processed by using the transmitter neural network of the first apparatus, so that adaptability of communication between the first apparatus and the second apparatus is improved.

In a possible implementation, the method further includes: The second apparatus sends a parameter indication to the first apparatus, where the parameter indication indicates an amount of anchor data and/or identification information of the anchor data, the anchor data is included in shared data, and the anchor data is used by the first apparatus to determine the second data.

In the possible implementation, the second apparatus may notify, by using the parameter indication, the first apparatus of the anchor data that should be used. In this way, communication efficiency between the first apparatus and the second apparatus can be improved.

In a possible implementation, the method further includes: The second apparatus updates the shared data based on an update indication for the shared data.

In the possible implementation, the update indication may be mutually sent between the first apparatus and the second apparatus, or may be sent by another apparatus to the first apparatus or the second apparatus. Through management of the shared data, the anchor data may be selected by using latest shared data. This helps improve a communication effect between the first apparatus and the second apparatus.

In a possible implementation, the shared data is used to train the receiver neural network of the second apparatus.

In the possible implementation, the shared data may be used for training of the sending/receiver neural network of the first apparatus and/or the adaptation model, or may be used for training of the sending/receiver neural network of the second apparatus. In this way, the communication effect between the first apparatus and the second apparatus is improved.

A third aspect of this application provides a data processing method, including: A first apparatus processes source data by using a transmitter neural network, to obtain first data. The first apparatus sends information about the first data and a parameter indication to a second apparatus, where the parameter indication indicates an amount of anchor data and/or identification information of the anchor data, the anchor data is included in shared data, the anchor data and the first data are used by the second apparatus to determine estimated data, and the estimated data is used by a receiver neural network of the second apparatus to restore the source data of the first apparatus.

In this application, the first apparatus may alternatively not send a distance, but send (f1(x)) or (t1(f1(x))). The second apparatus may determine the anchor data based on the parameter indication, and estimate (f2(x)) based on the anchor data and (f1(x)) or (t1(f1(x))) by using the transmitter neural network. Then, the receiver neural network of the second apparatus receives the estimated (f2(x)). In this way, adaptive communication between the first apparatus and the second apparatus is implemented.

In a possible implementation, the information about the first data is information obtained after quantization processing is performed on the first data (f1(x)).

In the possible implementation, the first data (f1(x)) is directly sent, so that communication efficiency between the first apparatus and the second apparatus can be improved.

In a possible implementation, the information about the first data is information about data obtained after the first data is processed by using an adaptation model, and the adaptation model is obtained by the first apparatus and the second apparatus through collaborative training based on a third training target or a fourth training target, where the third training target indicates to reduce an absolute value of a difference between a first signal and a second signal, the first signal is data obtained after first sample data is processed by using the transmitter neural network of the first apparatus and the adaptation model, and the second signal is data obtained after the first sample data is processed by using a transmitter neural network of the second apparatus; and the fourth training target indicates to reduce an absolute value of a difference between data restored after the receiver neural network of the second apparatus processes the first signal and the first sample data.

In this application, if the first sample data is represented as (x1), the first signal may be represented as (t1(f1(x1))), the second signal may be represented as (f2(x1)), and the data restored after the receiver neural network of the second apparatus processes the first signal may be represented as g2(t1(f1(x1))). The third training target is to enable (t1(f1(x1))) to be as close as possible to (f2(xl)), in other words, (t1(f1(x1)))≈(f2(x1)). The fourth training target is to enable g2(t1(f1(x1))) to be as close as possible to x1, in other words, g2(t1(f1(x1)))≈x1.

In the possible implementation, the information about the first data sent by the first apparatus is information obtained after quantization processing is performed on (t1(f1(x))). This can better improve adaptability of communication between the first apparatus and the second apparatus.

In a possible implementation, the method further includes: The first apparatus determines anchor data from shared data based on a transmission parameter, where second data is obtained by processing the anchor data by using the transmitter neural network of the first apparatus, and the transmission parameter is used to determine an amount of the anchor data. The first apparatus sends the anchor data and the second data to the second apparatus, where the second data is used by the second apparatus to determine the estimated data.

In this possible implementation, the first apparatus may send the anchor data and the second data to the second apparatus in advance. In this way, a data transmission amount when the information about the first data is sent can be reduced. It is clear that the first apparatus may alternatively send the anchor data and the second data together with the first data.

In a possible implementation, the method further includes: The first apparatus updates the shared data based on an update indication for the shared data.

In the possible implementation, the update indication may be mutually sent between the first apparatus and the second apparatus, or may be sent by another apparatus to the first apparatus or the second apparatus. Through management of the shared data, the anchor data may be selected by using latest shared data. This helps improve a communication effect between the first apparatus and the second apparatus.

In a possible implementation, the shared data is used to train the transmitter neural network of the first apparatus and/or the adaptation model.

In the possible implementation, the shared data may be used for training of the sending/receiver neural network of the first apparatus and/or the adaptation model, or may be used for training of the sending/receiver neural network of the second apparatus. In this way, the communication effect between the first apparatus and the second apparatus is improved.

A fourth aspect of this application provides a data processing method, including: A second apparatus receives information about first data and a parameter indication from a first apparatus, where the parameter indication indicates an amount of anchor data and/or identification information of the anchor data, the anchor data is included in shared data. The second apparatus determines the corresponding anchor data and second data based on the parameter indication, where the second data is data obtained after the anchor data is processed by using a transmitter neural network of the first apparatus. The second apparatus determines estimated data based on the first data, the second data, and third data, and processes the estimated data by using a receiver neural network of the second apparatus, to restore source data of the first apparatus, where the third data is data obtained after the anchor data is processed by using a transmitter neural network of the second apparatus.

In this application, the source data may be represented as (x), the first data may be represented as (f1(x)), and the data obtained after the first data is processed by using an adaptation model may be represented as (t1(f1(x))). The anchor data may be represented as (x0), the data obtained after the anchor data is processed by using the transmitter neural network of the first apparatus is represented as (f1(x0)), data obtained after the anchor data is further processed by using the adaptation model may be represented as (t1(f1(x0))), the data obtained after the anchor data is processed by using the transmitter neural network of the second apparatus may be represented as (f2(x0)), and data obtained after the source data is processed by using the transmitter neural network of the second apparatus may be represented as (f2(x)).

In this application, the second apparatus may estimate (f2(x)) by using (f1(x)), (f1(x0)), and (f2(x0)). Alternatively, the second apparatus may estimate (f2(x)) by using (t1(f1(x))), (tl(fl(x0))), and (f2(x0)).

In this application, the second apparatus first obtains (f2(x)) through estimation, and then the receiver neural network of the second apparatus performs receiving processing on (f2(x)). The transmitter neural network and the receiver neural network of the second apparatus are obtained through joint training. Therefore, the receiver neural network of the second apparatus may correctly receive (f2(x)), to implement adaptive communication between the first apparatus and the second apparatus.

In a possible implementation, that the second apparatus determines the corresponding anchor data and the second data based on the parameter indication includes: The second apparatus determines the anchor data from the shared data based on the parameter indication. The second apparatus determines, based on a correspondence between the anchor data and the second data, the second data corresponding to the anchor data.

In the possible implementation, the second apparatus may determine the anchor data (x0) based on the parameter indication, and then determine (f1(x0)) or (t1(f1(x0))). In this way, efficiency of estimating (f2(x)) can be improved.

In a possible implementation, an estimation condition of the estimated data is that a distance of the first data relative to the second data is equal to a distance of the estimated data relative to the third data.

In the possible implementation, the estimation condition may be represented as d((f1(x)), (fl(x0)))=d((f2(x)), (f2(x0))), or may be represented as d((t1(f1(x))), (t1(f1(x0))))=d((f2(x)),(f2(x0))). In this way, after the three pieces of data (f1(x)), (fl(x0)), and (f2(x0)) are known, (f2(x)) can be estimated. Alternatively, after the three pieces of data (t1(f1(x))), (t1(f1(x0))), and (f2(x0)) are known, (f2(x)) can be estimated.

In a possible implementation, before the second apparatus receives the information about the first data and the parameter indication from the first apparatus, the method further includes: The second apparatus receives the anchor data and the second data from the first apparatus. The second apparatus establishes the correspondence between the anchor data and the second data.

In the possible implementation, the second apparatus may alternatively generate (f2(x0)) in advance based on the anchor data (x0), and establish a correspondence between (x0) and (fl(x0)) or (t1(f1(x0))), and (f2(x0)). In this way, after (x0) is determined based on the parameter indication, (fl(x0)) or (tl(fl(x0))) and (f2(x0)) may be determined based on the correspondence, and then the estimated data of (f2(x)) may be obtained through estimation with reference to (f1(x)) or (t1(f1(x))). In this way, efficiency of estimating (f2(x)) can be improved.

In a possible implementation, the method further includes: The second apparatus updates the shared data based on an update indication for the shared data.

In the possible implementation, the update indication may be mutually sent between the first apparatus and the second apparatus, or may be sent by another apparatus to the first apparatus or the second apparatus. Through management of the shared data, the anchor data may be selected by using latest shared data. This helps improve a communication effect between the first apparatus and the second apparatus.

A fifth aspect of this application provides a communication apparatus. The communication apparatus includes:
a processing module, configured to obtain first data and second data, where the first data is data obtained after to-be-sent source data is processed by using a transmitter neural network of a first apparatus, and the second data is data that has a reference function for the first data; and
a transceiver module, configured to send information about a first distance to a second apparatus, where the first distance is obtained by using the first data and the second data, and the first distance is used by the second apparatus to restore the source data.

In a possible implementation, the first distance is a distance between the first data and the second data.

In a possible implementation, the first distance is a distance between data obtained after the first data and the second data are separately processed by using an adaptation model, and the adaptation model is obtained by the first apparatus and the second apparatus through collaborative training based on a first training target or a second training target. The first training target indicates to reduce an absolute value of a difference between a second distance and a third distance, where the second distance is a distance between data obtained after first sample data and second sample data both are separately processed by using the transmitter neural network of the first apparatus and the adaptation model, and the third distance is a distance between data obtained after the first sample data and the second sample data are separately processed by using a transmitter neural network of the second apparatus. Alternatively, the second distance is a distance between data obtained after first sample data is processed by using the transmitter neural network of the first apparatus and the adaptation model and data obtained after the first sample data is processed by using a shared neural network and the adaptation model, and the third distance is a distance between data obtained after the first sample data is processed by using a transmitter neural network of the second apparatus and data obtained after the first sample data is processed by using the shared neural network. The second training target indicates to reduce an absolute value of a difference between restored data and the first sample data, and the restored data is data restored after a receiver neural network of the second apparatus processes the second distance.

In a possible implementation, the transceiver module is further configured to: before obtaining the first data and the second data, receive a parameter indication from the second apparatus, where the parameter indication indicates an amount of anchor data and/or identification information of the anchor data, and the anchor data is included in shared data.

The processing module is further used by the first apparatus to determine the anchor data from the shared data based on the parameter indication, where the second data is obtained after the anchor data is processed by using the transmitter neural network of the first apparatus.

In a possible implementation, the processing module is further configured to determine anchor data from shared data based on a transmission parameter, where the second data is obtained by processing the anchor data by using the transmitter neural network of the first apparatus, and the transmission parameter is used to determine an amount of the anchor data.

In a possible implementation, the processing module is further configured to update the shared data based on an update indication for the shared data.

In a possible implementation, the shared data is used to train the transmitter neural network of the first apparatus and/or the adaptation model.

In a possible implementation, the second data is data obtained after the source data is processed by using the shared neural network, and the shared neural network is a neural network configured in each of the first apparatus and the second apparatus.

In a possible implementation, the information about the first distance is information obtained after quantization processing is performed on one or more first distances.

A sixth aspect of this application provides a communication apparatus. The communication apparatus includes:
a transceiver module, configured to receive information about a first distance from a first apparatus, where the first distance is obtained by using first data and second data, the first data is data obtained after source data of the first apparatus is processed by using a transmitter neural network, and the second data is data that has a reference function for the first data; and
a processing module, configured to restore source data from the first distance by using a receiver neural network.

In a possible implementation, the transceiver module is further configured to send a parameter indication to the first apparatus, where the parameter indication indicates an amount of anchor data and/or identification information of the anchor data, the anchor data is included in shared data, and the anchor data is used by the first apparatus to determine the second data.

In a possible implementation, the processing module is further configured to update the shared data based on an update indication for the shared data.

In a possible implementation, the shared data is used to train the receiver neural network of a second apparatus.

A seventh aspect of this application provides a communication apparatus. The communication apparatus includes:
a processing module, configured to process source data by using a transmitter neural network, to obtain first data; and
a transceiver module, configured to send information about the first data and a parameter indication to a second apparatus, where the parameter indication indicates an amount of anchor data and/or identification information of the anchor data, the anchor data is included in shared data, the anchor data and the first data are used by the second apparatus to determine estimated data, and the estimated data is used by a receiver neural network of the second apparatus to restore the source data of a first apparatus.

In a possible implementation, the information about the first data is information about data obtained after the first data is processed by using an adaptation model, and the adaptation model is obtained by the first apparatus and the second apparatus through collaborative training based on a third training target or a fourth training target, where the third training target indicates to reduce an absolute value of a difference between a first signal and a second signal, the first signal is data obtained after first sample data is processed by using the transmitter neural network of the first apparatus and the adaptation model, and the second signal is data obtained after the first sample data is processed by using a transmitter neural network of the second apparatus; and the fourth training target indicates to reduce an absolute value of a difference between data restored after the receiver neural network of the second apparatus processes the first signal and the first sample data.

In a possible implementation, the processing module is further configured to determine anchor data from shared data based on a transmission parameter, where the second data is obtained by processing the anchor data by using the transmitter neural network of the first apparatus, and the transmission parameter is used to determine an amount of the anchor data.

In a possible implementation, the transceiver module is further configured to send the anchor data and the second data to the second apparatus, where the second data is used by the second apparatus to determine the estimated data.

In a possible implementation, the processing module is further configured to update the shared data based on an update indication for the shared data.

In a possible implementation, the shared data is used to train the transmitter neural network of the first apparatus and/or the adaptation model.

An eighth aspect of this application provides a communication apparatus. The communication apparatus includes:
a transceiver module, configured to receive information about first data and a parameter indication from a first apparatus, where the parameter indication indicates an amount of anchor data and/or identification information of the anchor data, and the anchor data is included in shared data; and
a processing module, configured to: determine the corresponding anchor data and second data based on the parameter indication, where the second data is data obtained after the anchor data is processed by using a transmitter neural network of the first apparatus; determine estimated data based on the first data, the second data, and third data; and process estimated data by using a receiver neural network of a second apparatus to restore source data of the first apparatus, where the third data is data obtained after the anchor data is processed by using a transmitter neural network of the second apparatus.

In a possible implementation, the processing module is configured to: determine the anchor data from the shared data based on the parameter indication; and determine, based on a correspondence between the anchor data and the second data, the second data corresponding to the anchor data.

In a possible implementation, an estimation condition of the estimated data is that a distance of the first data relative to the second data is equal to a distance of the estimated data relative to the third data.

In a possible implementation, the transceiver module is further configured to: before the second apparatus receives the information about the first data and the parameter indication from the first apparatus, receive the anchor data and the second data from the first apparatus.

The processing module is further configured to establish the correspondence between the anchor data and the second data.

In a possible implementation, the processing module is further configured to update the shared data based on an update indication for the shared data.

A ninth aspect of this application provides a communication apparatus. The communication apparatus includes a processor. The processor is configured to invoke and run a computer program stored in a memory, to enable the processor to implement any one of the first aspect or the implementations of the first aspect.

Optionally, the communication apparatus further includes a transceiver. The processor is further configured to control the transceiver to send and receive a signal.

Optionally, the communication apparatus includes the memory. The memory stores the computer program.

A tenth aspect of this application provides a communication apparatus. The communication apparatus includes a processor. The processor is configured to invoke and run a computer program stored in a memory, to enable the processor to implement any one of the second aspect or the implementations of the second aspect.

Optionally, the communication apparatus further includes a transceiver. The processor is further configured to control the transceiver to send and receive a signal.

Optionally, the communication apparatus includes the memory. The memory stores the computer program.

An eleventh aspect of this application provides a communication apparatus. The communication apparatus includes a processor. The processor is configured to invoke and run a computer program stored in a memory, to enable the processor to implement any one of the third aspect or the implementations of the third aspect.

Optionally, the communication apparatus further includes a transceiver. The processor is further configured to control the transceiver to send and receive a signal.

Optionally, the communication apparatus includes the memory. The memory stores the computer program.

A twelfth aspect of this application provides a communication apparatus. The communication apparatus includes a processor. The processor is configured to invoke and run a computer program stored in a memory, to enable the processor to implement any one of the fourth aspect or the implementations of the fourth aspect.

Optionally, the communication apparatus further includes a transceiver. The processor is further configured to control the transceiver to send and receive a signal.

Optionally, the communication apparatus includes the memory. The memory stores the computer program.

The communication apparatus according to the ninth aspect to the twelfth aspect may be a device or a chip (system) in the device.

A thirteenth aspect of this application provides a computer program product including instructions. When the computer program product is run on a computer, the computer is enabled to perform any one of the first aspect or the implementations of the first aspect.

A fourteenth aspect of this application provides a computer program product including instructions. When the computer program product is run on a computer, the computer is enabled to perform any one of the second aspect or the implementations of the second aspect.

A fifteenth aspect of this application provides a computer program product including instructions. When the computer program product is run on a computer, the computer is enabled to perform any one of the third aspect or the implementations of the third aspect.

A sixteenth aspect of this application provides a computer program product including instructions. When the computer program product is run on a computer, the computer is enabled to perform any one of the fourth aspect or the implementations of the fourth aspect.

A seventeenth aspect of this application provides a computer-readable storage medium, including computer instructions. When the computer instructions are run on a computer, the computer is enabled to perform any one of the first aspect or the implementations of the first aspect.

An eighteenth aspect of this application provides a computer-readable storage medium, including computer instructions. When the computer instructions are run on a computer, the computer is enabled to perform any one of the second aspect or the implementations of the second aspect.

A nineteenth aspect of this application provides a computer-readable storage medium, including computer instructions. When the computer instructions are run on a computer, the computer is enabled to perform any one of the third aspect or the implementations of the third aspect.

A twentieth aspect of this application provides a computer-readable storage medium, including computer instructions. When the computer instructions are run on a computer, the computer is enabled to perform any one of the fourth aspect or the implementations of the fourth aspect.

A twenty-first aspect of this application provides a chip apparatus, including a processor, configured to be connected to a memory, and invoke a program stored in the memory, to enable the processor to perform any one of the first aspect or the implementations of the first aspect.

A twenty-second aspect of this application provides a chip apparatus, including a processor, configured to be connected to a memory, and invoke a program stored in the memory, to enable the processor to perform any one of the second aspect or the implementations of the second aspect.

A twenty-third aspect of this application provides a chip apparatus, including a processor, configured to be connected to a memory, and invoke a program stored in the memory, to enable the processor to perform any one of the third aspect or the implementations of the third aspect.

A twenty-fourth aspect of this application provides a chip apparatus, including a processor, configured to be connected to a memory, and invoke a program stored in the memory, to enable the processor to perform any one of the fourth aspect or the implementations of the fourth aspect.

A twenty-fifth aspect of this application provides a communication system. The communication system includes a first apparatus and a second apparatus, the first apparatus may be the communication apparatus according to any one of the fifth aspect, the ninth aspect, or the implementations of the fifth aspect and the ninth aspect, and the second apparatus may be the communication apparatus according to any one of the sixth aspect, the tenth aspect, or the implementations of the sixth aspect and the tenth aspect.

A twenty-sixth aspect of this application provides a communication system. The communication system includes a first apparatus and a second apparatus, the first apparatus may be the communication apparatus according to any one of the seventh aspect, the eleventh aspect, or the implementations of the seventh aspect and the eleventh aspect, and the second apparatus may be the communication apparatus according to any one of the eighth aspect, the twelfth aspect, or the implementations of the eighth aspect and the twelfth aspect.

For technical effects of any one of the fifth aspect and the implementations of the fifth aspect, and technical effects of the ninth aspect, the thirteenth aspect, the seventeenth aspect, and the twenty-first aspect, refer to the technical effects of any one of the first aspect and the implementations of the first aspect for understanding.

For technical effects of any one of the sixth aspect and the implementations of the sixth aspect, and technical effects of the tenth aspect, the fourteenth aspect, the eighteenth aspect, and the twenty-second aspect, refer to the technical effects of any one of the second aspect and the implementations of the second aspect for understanding.

For technical effects of any one of the seventh aspect and the implementations of the seventh aspect, and technical effects of the eleventh aspect, the fifteenth aspect, the nineteenth aspect, and the twenty-third aspect, refer to the technical effects of any one of the third aspect and the implementations of the third aspect for understanding.

For technical effects of any one of the eighth aspect and the implementations of the eighth aspect, and technical effects of the twelfth aspect, the sixteenth aspect, the twentieth aspect, and the twenty-fourth aspect, refer to the technical effects of any one of the fourth aspect and the implementations of the fourth aspect for understanding.

### BRIEF DESCRIPTION OF DRAWINGS

To describe technical solutions in embodiments of this application more clearly, the following briefly describes accompanying drawings for describing embodiments. It is clear that the accompanying drawings in the following descriptions show merely some embodiments of this application, and a person of ordinary skill in the art may still derive other drawings from these accompanying drawings without creative efforts.
FIG. 1A is a diagram of a structure of a communication system according to an embodiment of this application;
FIG. 1B is a diagram of another structure of a communication system according to an embodiment of this application;
FIG. 2 is a diagram of another structure of a communication system according to an embodiment of this application;
FIG. 3 is a diagram of an embodiment of a data processing method according to an embodiment of this application;
FIG. 4A is a diagram of an embodiment of a model training process according to an embodiment of this application;
FIG. 4B is a diagram of another embodiment of a model training process according to an embodiment of this application;
FIG. 5A is a diagram of another embodiment of a data processing method according to an embodiment of this application;
FIG. 5B is a diagram of another embodiment of a data processing method according to an embodiment of this application;
FIG. 6A is a diagram of another embodiment of a data processing method according to an embodiment of this application;
FIG. 6B is a diagram of another embodiment of a data processing method according to an embodiment of this application;
FIG. 7 is a diagram of another embodiment of a data processing method according to an embodiment of this application;
FIG. 8 is a diagram of another structure of a communication system according to an embodiment of this application;
FIG. 9 is a diagram of another embodiment of a data processing method according to an embodiment of this application;
FIG. 10A is a diagram of another embodiment of a data processing method according to an embodiment of this application;
FIG. 10B is a diagram of another embodiment of a data processing method according to an embodiment of this application;
FIG. 11 is a diagram of a structure of a communication apparatus according to an embodiment of this application;
FIG. 12 is a diagram of another structure of a communication apparatus according to an embodiment of this application;
FIG. 13 is a diagram of another structure of a communication apparatus according to an embodiment of this application;
FIG. 14 is a diagram of another structure of a communication apparatus according to an embodiment of this application; and
FIG. 15 is a diagram of another structure of a communication apparatus according to an embodiment of this application.

### DESCRIPTION OF EMBODIMENTS

Embodiments of this application provide a data processing method, to improve adaptability of communication between a transmitter and a receiver. This application further provides a corresponding communication apparatus, a computer-readable storage medium, a computer program product, and the like. Details are separately described below.

Technical solutions in embodiments of this application may be applied to various communication systems, for example, a satellite communication system, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system after a 5G network (for example, a 6G mobile communication system), and a vehicle to everything (vehicle to everything, V2X) communication system.

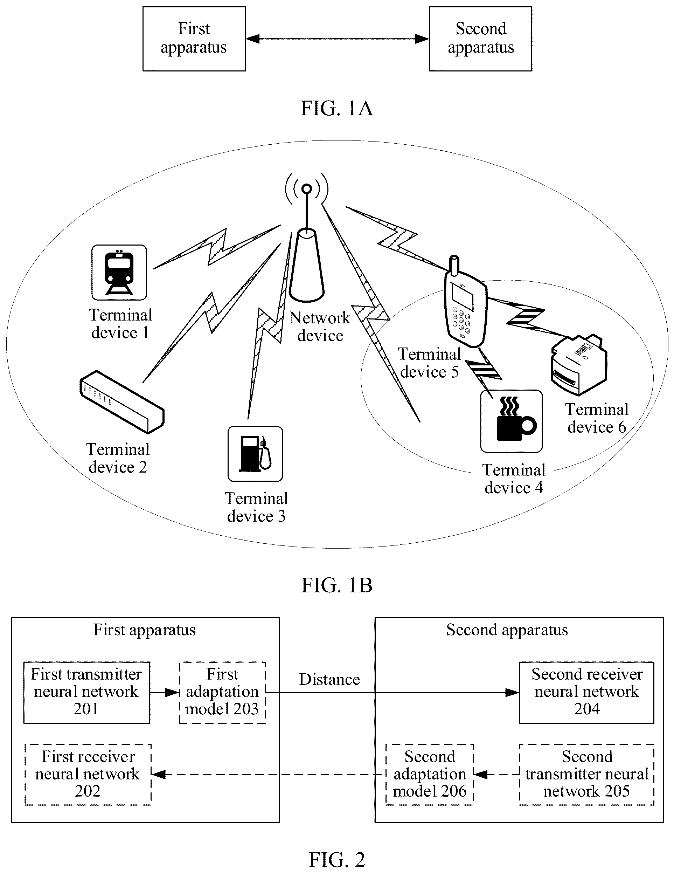

FIG. 1A is a diagram of a structure of a communication system according to an embodiment of this application.

As shown in FIG. 1A, a communication system to which this application is applicable includes a first apparatus and a second apparatus. The first apparatus and the second apparatus may be devices, or may be chips (systems) in the devices. When the first apparatus or the second apparatus is the device, the first apparatus may be a terminal device, and the second apparatus may be a network device or a terminal device; or the first apparatus may be a network device, and the second apparatus may be a terminal device or a network device. When the first apparatus or the second apparatus is the chip (system), the first apparatus may be a chip (system) in a terminal device, and the second apparatus may be a chip (system) in a network device or the terminal device; or the first apparatus may be a chip (system) in a network device, and the second apparatus may be a chip (system) in a terminal device or the network device.

In the communication system shown in FIG. 1A, an example in which the first apparatus and the second apparatus are a terminal device and a network device is used. For a structure of the communication system, refer to FIG. 1B for understanding.

As shown in FIG. 1B, a communication system shown in FIG. 1B includes a network device and a terminal device. The communication system includes one or more network devices and one or more terminal devices. In the communication system, a terminal device 1 to a terminal device 6 each may communicate with the network device. In addition, the terminal device 4, the terminal device 5, and the terminal device 6 may also form a communication system. For example, the network device may send downlink information to the terminal device 5, and the terminal device 5 may send the downlink information to the terminal device 4 or the terminal device 6.

The following describes the terminal device and the network device in this application.

The terminal device may be a wireless terminal device that can receive scheduling and indication information of the network device. The wireless terminal device may be a device that provides a user with voice and/or data connectivity, or a handheld device with a wireless connection function, or another processing device connected to a wireless modem.

The terminal device is also referred to as user equipment (user equipment, UE), a mobile station (mobile station, MS), a mobile terminal (mobile terminal, MT), or the like, and is a device that includes a wireless communication function (providing voice/data connectivity for a user), for example, a handheld device or a vehicle-mounted device that has a wireless connection function. Currently, some examples of the terminal device are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in an internet of vehicles, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in the internet of vehicles may be a vehicle-mounted device, an entire vehicle device, a vehicle-mounted module, a vehicle, or the like. The wireless terminal in the industrial control may be a camera, a robot, or the like. The wireless terminal in the smart home may be a television, an air conditioner, a sweeper, a speaker, a set-top box, or the like.

The network device may be a device in a wireless network. For example, the network device is a device that is deployed in a radio access network and that provides a wireless communication function for the terminal device. For example, the network device may be a radio access network (radio access network, RAN) node that connects the terminal device to the wireless network, and may also be referred to as an access network device.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a network device in a 5G mobile communication system, for example, a next generation NodeB (next generation NodeB, gNB), a transmission reception point (transmission reception point, TRP), or a transmission point (transmission point, TP) in a new radio (new radio, NR) system; or one antenna panel or a group of (including a plurality of antenna panels) antenna panels of a base station in the 5G mobile communication system. Alternatively, the network device may be a network node that forms a gNB or a transmission point, for example, a baseband unit (baseband unit, BBU) or a distributed unit (distributed unit, DU).

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in this architecture, higher layer signaling (for example, RRC layer signaling) may also be considered to be sent by the DU, or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

FIG. 2 is a diagram of another structure of a communication system according to an embodiment of this application.

As shown in FIG. 2, the communication system includes a first apparatus and a second apparatus. The first apparatus includes a first transmitter neural network 201, and the first apparatus may further include a first receiver neural network 202 and a first adaptation model 203. The second apparatus includes a second receiver neural network 204, and the second apparatus may further include a second transmitter neural network 205 and a second adaptation model 206.

The first transmitter neural network 201 and the first receiver neural network 202 are relative, the second transmitter neural network 205 and the second receiver neural network 204 are relative, the first transmitter neural network 201 and the second receiver neural network 204 are relative, and the second transmitter neural network 205 and the first receiver neural network 202 are relative. For example, the first transmitter neural network 201/the second transmitter neural network 205 may be a neural network used for encoding, and the first receiver neural network 202/the second receiver neural network 204 may be a neural network used for decoding. The first transmitter neural network 201/the second transmitter neural network 205 may be a neural network used for signal modulation, and the first receiver neural network 202/the second receiver neural network 204 may be a neural network used for signal demodulation. The first transmitter neural network 201/the second transmitter neural network 205 may be a neural network used for compression, and the first receiver neural network 202/the second receiver neural network 204 may be a neural network used for decompression.

The first adaptation model 203 and the second adaptation model 206 may be obtained by the first apparatus and the second apparatus through collaborative training.

In the communication system shown in FIG. 2, the first transmitter neural network 201 and the first receiver neural network 202 in the first apparatus are obtained through joint training, and may communicate with each other normally. The second transmitter neural network 205 and the second receiver neural network 204 in the second apparatus are obtained through joint training, and may communicate with each other normally. Usually, the first transmitter neural network 201 and the first receiver neural network 202 in the first apparatus, and the second transmitter neural network 205 and the second receiver neural network 204 in the second apparatus, are separately trained. The first transmitter neural network 201 of the first apparatus usually cannot normally communicate with the second receiver neural network 204 of the second apparatus. Similarly, the second transmitter neural network 204 of the second apparatus cannot normally communicate with the first receiver neural network 202 of the first apparatus. Based on this, in the communication system in this embodiment of this application, data that has a reference function is introduced to the first apparatus and the second apparatus for data processed by using the transmitter neural network, so that a distance between the two pieces of data can be determined, and normal communication between the first apparatus and the second apparatus is implemented by using the distance between the two pieces of data.

The first transmitter neural network 201 is described as a transmitter neural network in the first apparatus in the following embodiment. The second receiver neural network 204 is described as a receiver neural network in the second apparatus in the following embodiment. The second transmitter neural network 205 is described as a transmitter neural network in the second apparatus in the following embodiment. The first receiver neural network 202 is described as a receiver neural network in the first apparatus in the following embodiment.

In this application, the transmitter neural network, the receiver neural network, the first adaptation model, and the second adaptation model may all be artificial intelligence (artificial intelligence, AI) modules, and the AI modules are configured to implement corresponding AI functions. AI modules deployed in different network elements may be the same or different. Models of different AI modules are configured based on different parameters, and the AI modules may implement different functions. The model of the AI module may be configured based on one or more of the following parameters: a structure parameter (for example, at least one of the following: a quantity of layers of a neural network, a width of a neural network, a connection relationship between layers, a weight of a neuron, an activation function of a neuron, or a bias in an activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One output may be obtained through inference by using one model, where the output includes one or more parameters. Learning processes, training processes, or inference processes of different models may be deployed on different nodes or devices, or may be deployed on a same node or device.

A neural network of an AI model may be a neural network including an embedding layer (Embedding layer) and a multilayer perceptron (multilayer perception, MLP), or may be a deep neural network (deep neural network, DNN), a convolutional neural network (convolutional neural network, CNN), a recurrent neural network (recurrent neural network, RNN), a residual network, another neural network, or the like.

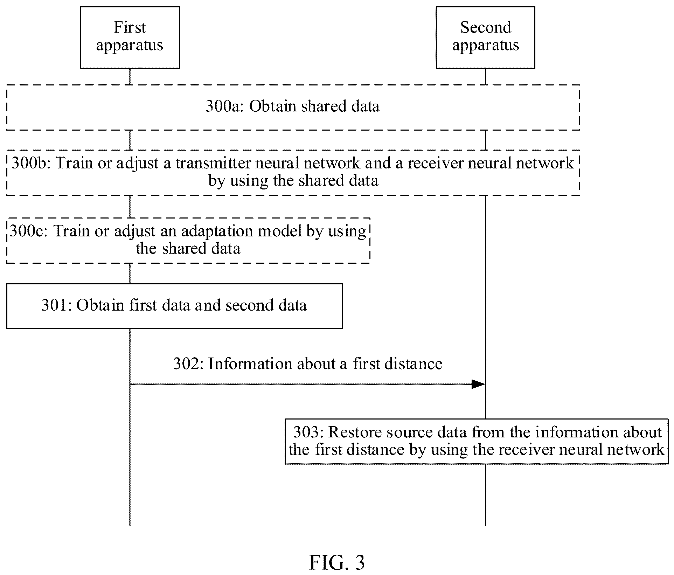

For a data processing process related in a communication process of the communication system that uses the structure shown in FIG. 2, refer to FIG. 3 for understanding.

As shown in FIG. 3, an embodiment of a data processing method according to an embodiment of this application includes the following steps.

301: A first apparatus obtains first data and second data.

The first data is data obtained after to-be-sent source data is processed by using a transmitter neural network of the first apparatus, and the second data is data that has a reference function for the first data.

In this application, the data may also be expressed as a signal, a symbol, or a bit, which is merely a different form of expression and is essentially data.

In this application, that the first apparatus obtains the first data and the second data may be that the first apparatus generates (or obtains through calculation or operation) the first data and the second data by using the transmitter neural network.

302: The first apparatus sends information about a first distance to a second apparatus. Correspondingly, the second apparatus receives the information about the first distance from the first apparatus.

In this application, the first distance is obtained by using the first data and the second data. It indicates that the first distance may be a distance between the first data and the second data, or may be a distance between two pieces of data obtained after the first data and the second data are processed. The first distance may be a distance represented by a cosine similarity, a mean square error, a projection, a Hamming distance, a Euclidean distance, a standard Euclidean distance, a Manhattan distance, or the like.

Optionally, the first distance is the distance between the first data and the second data. The first distance is directly determined by using the first data and the second data. If the second data is used as a coordinate basis, the first data may be a relative representation on the coordinate basis. For example, the first distance may be obtained by calculating a cosine similarity between the first data and the second data. If the to-be-sent source data of the first apparatus is represented as (x), the data obtained after the to-be-sent source data is processed by using the transmitter neural network of the first apparatus may be represented as (f1(x)). If the second data is represented as RD, the first distance may be represented as d((f1(x)), RD).

Optionally, the first distance is a distance between data obtained after the first data and the second data are separately processed by using an adaptation model, and the adaptation model is obtained by the first apparatus and the second apparatus through collaborative training based on a first training target or a second training target. Data obtained after the first data is processed by using the adaptation model may be represented as (tl (fl (x))). Data obtained after the second data is processed by using the adaptation model may be represented as (t1(RD)). In this case, the first distance may be represented as d((t1(f1(x))), (t1(RD))).

The first training target indicates to reduce an absolute value of a difference between a second distance and a third distance, where the second distance is a distance between data obtained after first sample data and second sample data both are separately processed by using the transmitter neural network of the first apparatus and the adaptation model, and the third distance is a distance between data obtained after the first sample data and the second sample data are separately processed by using a transmitter neural network of the second apparatus. Alternatively, the second distance is a distance between data obtained after first sample data is processed by using the transmitter neural network of the first apparatus and the adaptation model and data obtained after the first sample data is processed by using a shared neural network and the adaptation model, and the third distance is a distance between data obtained after the first sample data is processed by using a transmitter neural network of the second apparatus and data obtained after the first sample data is processed by using the shared neural network.

The second training target indicates to reduce an absolute value of a difference between restored data and the first sample data, where the restored data is data restored after a receiver neural network of the second apparatus processes the second distance.

In this application, the shared neural network may be a neural network that is configured outside the first apparatus and the second apparatus and that can be used by both the first apparatus and the second apparatus, or may be a same neural network that is configured in each of the first apparatus and the second apparatus.

In this application, the first training target may be the second distance being as close as possible to the third distance.

In a case, the second distance may be a distance d((tl(fl(xl))), (tl(fl(x2)))) between two pieces of data (t1(f1(x1))) and (t1(f1(x2))) obtained by processing the first sample data x1 and the second sample data x2 by using the transmitter neural network f1 of the first apparatus and the adaptation model t1. The third distance may be a distance d((f2(x1)), (f2(x2))) of two pieces of data (f2(x1)) and (f2(x2)) obtained by processing the first sample data x1 and the second sample data x2 by using the transmitter neural network f2 of the second apparatus. In this case, the second distance is as close as possible to the third distance, that is, d((t1(f1(x1))), (t1(f1(x2))))≈d((f2(x1)), (f2(x2))).

In another case, the second distance may be a distance d((tl(fl(xl))), (t1(s1(x1)))) between data (t1(f1(x1))) obtained after the first sample data (x1) is processed by using the transmitter neural network f1 of the first apparatus and the adaptation model t1 and data (tl(sl(xl))) obtained after the first sample data (x1) is processed by using a shared neural network s1 and the adaptation model t1. The third distance is a distance d((f2(x1)), (s2(x1))) between data (f2(x1)) obtained after the first sample data (x1) is processed by using the transmitter neural network of the second apparatus and data (s2(x1)) obtained after the first sample data (x1) is processed by using a shared neural network s2 of the second apparatus. In this case, the second distance is as close as possible to the third distance, that is, d((t1(f1(x1))), (t1(s1(x1))))≈d((f2(x1)), (s2(x1))), where s1 and s2 are the same.

In this application, the second training target may be data g2(d((t1(f1(x1))), (t1(f1(x2))))) restored after the receiver neural network of the second apparatus processes the second distance being as close as possible to x1, that is, g2(d((t1(f1(x1))), (t1(f1(x2)))))≈x1.

In this application, after the adaptation model is added to the first apparatus, adaptability of communication between the first apparatus and the second apparatus is further improved.

A method used for distance calculation may be related to a communication task. For distance calculation methods of different communication tasks, refer to Table 1 for understanding.

**Table 1: Communication task and corresponding distance calculation method**

| Communication task | Distance calculation method |
|---|---|
| Channel information compression-decompression | Cosine similarity, mean square error, and projection |
| Channel encoding-decoding | Hamming distance and mean square error |
| Modulation-demodulation | Mean square error and Hamming distance |
| Signal-beam | Cosine similarity and mean square error |

303: The second apparatus restores the source data from the information about the first distance by using the receiver neural network.

In this application, the first apparatus and the second apparatus use same data as a reference, and a distance between data output by the transmitter neural network of the first apparatus and the data that has the reference function and a distance between data output by the transmitter neural network of the second apparatus and the data that has the reference function are usually close. In this way, after the data that has the reference function is introduced, the receiver neural network of the second apparatus can correctly receive data processed by using the transmitter neural network of the first apparatus, so that the adaptability of the communication between the first apparatus and the second apparatus is improved.

Optionally, before step 301, the method further includes the following steps 300a, 300b, and 300c.

300a: The first apparatus and the second apparatus separately obtain shared data.

300b: The first apparatus trains or adjusts the transmitter neural network and a receiver neural network by using the shared data. Correspondingly, the second apparatus trains or adjusts the transmitter neural network and the receiver neural network by using the shared data.

300c: The first apparatus trains or adjusts the adaptation model by using the shared data.

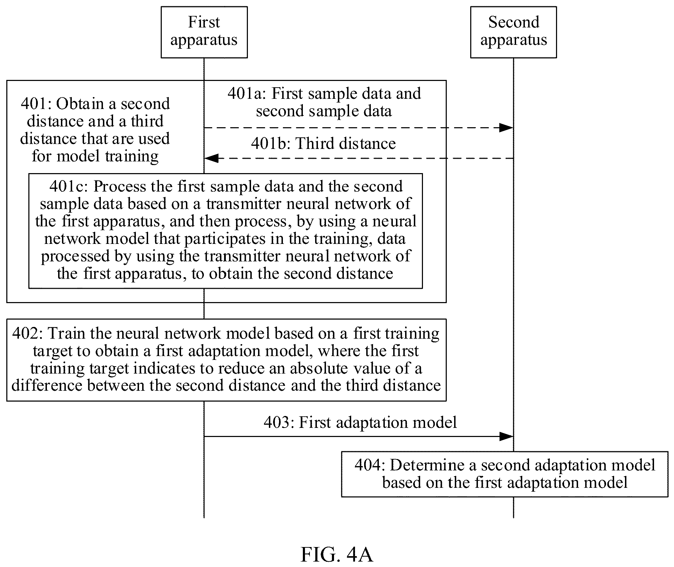

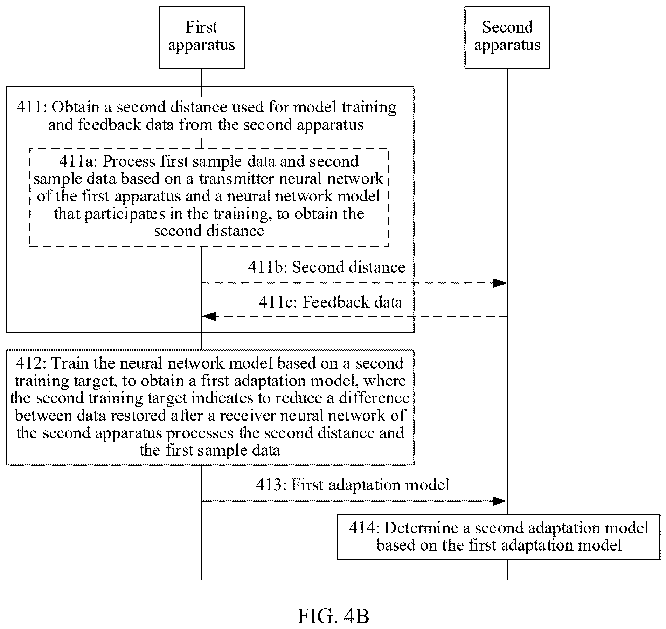

A training or adjustment process in step 300c may be obtained through training based on the first training target, or may be obtained through training based on the second training target. The following separately provides descriptions with reference to FIG. 4A and FIG. 4B.

### 1. Training based on the first training target

Refer to FIG. 4A. A training process of the adaptation model may include the following steps.

401: The first apparatus obtains the second distance and the third distance that are used for model training.

The second distance and the third distance may be obtained by using the first sample data and the second sample data, or may be obtained by using the first sample data. In this application, the second sample data is included in the shared data.

When the first apparatus includes the transmitter neural network and the adaptation model, but does not include the shared neural network, the second distance and the third distance are obtained by using the first sample data and the second sample data. When the first apparatus includes the transmitter neural network, the shared neural network, and the adaptation model, the second distance and the third distance are obtained by using the first sample data. The shared neural network is a neural network configured in each of the first apparatus and the second apparatus.

(1). The first apparatus includes the transmitter neural network and the adaptation model, but does not include the shared neural network.

The first sample data may be represented as (x1), and the second sample data may be represented as (x2). Data obtained after the first sample data (x1) is processed by using the transmitter neural network of the first apparatus and then processed by using the adaptation model is (tl(fl(x1))), and data obtained after the second sample data (x2) is processed by using the transmitter neural network of the first apparatus and then processed by using the adaptation model is (t1(f1(x2))), where f1 may represent the transmitter neural network of the first apparatus, and t1 represents a neural network model or a first adaptation model.

Data obtained after the transmitter neural network of the second apparatus processes the first sample data (x1) is (f2(x1)), and data obtained after the transmitter neural network of the second apparatus processes the second sample data (x2) is (f2(x2)), where f2 may represent the transmitter neural network of the second apparatus.

The second distance may be represented as d((tl(fl(xl))), (tl(fl(x2)))). The third distance may be represented as d((f2(x1)), (f2(x2))).

(2). The first apparatus includes the transmitter neural network, the shared neural network, and the adaptation model.

The second distance may be a second distance d((tl(fl(xl))), (t1(s1(x1)))) between data (t1(f1(x1))) obtained after the first sample data (x1) is processed by using the transmitter neural network f1 of the first apparatus and the adaptation model t1 and data (tl(sl(xl))) obtained after the first sample data (x1) is processed by using the shared neural network s1 and the adaptation model t1.

The third distance is a distance d((f2(x1)), (s2(x1))) between data (f2(x1)) obtained after the first sample data (x1) is processed by using the transmitter neural network of the second apparatus and data (s2(x1)) obtained after the first sample data (x1) is processed by using the shared neural network s2 of the second apparatus, where s1 and s2 are the same.

402: The first apparatus trains the neural network model based on the first training target to obtain the first adaptation model, where the first training target indicates to reduce the absolute value of the difference between the second distance and the third distance.

The first training target may be understood as enabling the second distance and the third distance to be as close as possible, or enabling a difference between the second distance and the third distance to be as small as possible, that is, d((t1(f1(x1))), (t1(f1(x2))))≈d((f2(x1)), (f2(x2))). A loss function of the neural network model in this training solution may be a difference between d((tl(fl(xl))), (tl(fl(x2)))) and d((f2(xl)), (f2(x2))). For example, a mean square error (mean square error, mse) may be represented as mse(d((t1(f1(x1))), (t1(f1(x2)))), d((f2(x1)), (f2(x2))))=(d((tl(fl(xl))), (t1(f1(x2))))-d((f2(x1)), (f2(x2))))².

The second distance being as close as possible to the third distance may alternatively be d((tl(fl(xl))), (t1(s1(x1))))≈d((f2(x1)), (s2(x1))). A loss function of the neural network model in this training solution may be a difference between d((tl(fl(xl))), (t1(s1(x1)))) and d((f2(x1)), (s2(x1))). For example, a mean square error (mean square error, mse) may be represented as mse(d((tl(fl(xl))), (tl(sl(xl)))), d((f2(x1)), (s2(xl))))=(d((tl(fl(xl))), (t1(s1(x1))))-d((f2(x1)), (s2(x1))))².

The first apparatus may calculate the loss function, update a weight of t1 by using an algorithm like gradient descent, and train the neural network model t1, to obtain the first adaptation model based on a target of minimizing the loss function.

Processes of 401 and 402 are repeatedly performed by using a plurality of source signals, and the neural network model is iterated and updated, so that the first adaptation model can be obtained.

Optionally, step 401 may include step 401a, step 401b, and step 401c.

401a: The first apparatus sends the first sample data and the second sample data to the second apparatus, or may send the first sample data to the second apparatus.

401b: The first apparatus receives the third distance from the second apparatus.

401c: The first apparatus processes the first sample data and the second sample data based on the transmitter neural network of the first apparatus, and then processes, by using the neural network model that participates in the training, data processed by using the transmitter neural network of the first apparatus, to obtain the second distance.

Optionally, after step 402, step 403 and step 404 may be further included.

403: The first apparatus sends the first adaptation model to the second apparatus, where the first adaptation model is used by the second apparatus to determine a second adaptation model used for the transmitter neural network of the second apparatus.

A neural network of the second adaptation model is an inverse neural network of a neural network of the first adaptation model.

404: The second apparatus determines the second adaptation model based on the first adaptation model.

In the model training solution provided in this embodiment of this application, because the receiver neural network of the second apparatus and the transmitter neural network of the second apparatus are usually jointly trained, the receiver neural network of the second apparatus can correctly receive the data processed by using the transmitter neural network of the second apparatus. If the second distance is as close as possible to the third distance, the receiver neural network of the second apparatus can also correctly receive the first distance sent by the first apparatus. Therefore, the first apparatus and the second apparatus can normally communicate with each other by using the training process.

### 2. Training based on the second training target

Refer to FIG. 4B. Another embodiment of a model training method according to an embodiment of this application includes the following steps.

411: The first apparatus obtains the second distance used for model training and feedback data from the second apparatus.

The second distance is obtained by using the first sample data and the second sample data.

The first sample data may be represented as (x1), and the second sample data may be represented as (x2). Data obtained after the first sample data (x1) is processed by using the transmitter neural network of the first apparatus and then processed by using the adaptation model is (t1(f1(x1))), and data obtained after the second sample data (x2) is processed by using the transmitter neural network of the first apparatus and then processed by using the adaptation model is (t1(f1(x2))), where f1 may represent the transmitter neural network of the first apparatus, and t1 represents a neural network model or a first adaptation model.

The second distance may be represented as d((t1(f1(x1))), (tl(fl(x2)))).

The feedback data from the second apparatus may be data restored after the receiver neural network of the second apparatus processes the second distance, and may be represented as g2(d((t1(f1(x1))), (tl(fl(x2))))), where g2 may represent the receiver neural network of the second apparatus.

412: The first apparatus trains the neural network model based on the second training target, to obtain the first adaptation model, where the second training target indicates to reduce the absolute value of the difference between the restored data and the first sample data, and the restored data is data restored after the receiver neural network of the second apparatus processes the second distance.

The second training target may be the data g2(d((tl(fl(xl))), (tl(fl(x2))))) restored after the receiver neural network of the second apparatus processes the second data being as close as possible to x1, that is, g2(d((t1(f1(x1))), (t1(f1(x2)))))≈x1.

Processes of 411 and 412 are repeatedly performed by using a plurality of pieces of sample data, and the neural network model is iterated and updated, so that the first adaptation model can be obtained.

Optionally, step 411 may include step 411a, step 411b, and step 411c.

411a: The first apparatus processes the first sample data and the second sample data based on the transmitter neural network of the first apparatus and the neural network model that participates in the training, to obtain the second distance.

411b: The first apparatus sends the second distance to the second apparatus.

411c: The first apparatus receives the feedback data from the second apparatus.

Optionally, after step 412, step 413 and step 414 may be further included.

413: The first apparatus sends the first adaptation model to the second apparatus, where the first adaptation model is used by the second apparatus to determine a second adaptation model used for the transmitter neural network of the second apparatus.

A neural network of the second adaptation model is an inverse neural network of a neural network of the first adaptation model.

414: The second apparatus determines the second adaptation model based on the first adaptation model.

In the model training solution provided in this embodiment of this application, the first adaptation model is obtained by the first apparatus and the second apparatus through joint training. Therefore, the first adaptation model can enable the transmitter neural network of the first apparatus and the receiver neural network of the second apparatus to normally communicate with each other.

In this embodiment of this application, there may be a plurality of solutions for determining the information about the first distance. The following uses two of the solutions as examples for description.

Solution 1: The information about the first distance is determined by using anchor data.

In this embodiment of this application, the first apparatus may determine the anchor data from the shared data based on a transmission parameter, where the transmission parameter is used to determine an amount of the anchor data. The transmission parameter may include, for example, a quantization bit quantity b and a quantization bit width B of each element.

In this application, the shared data refers to data shared by the first apparatus and the second apparatus. The shared data may be stored in both the first apparatus and the second apparatus, or may be stored in storage space of a third party, and both the first apparatus and the second apparatus may obtain the shared data from the storage space of the third party.

The foregoing process may be as follows: The first apparatus determines, based on the total quantization bit quantity b and the quantization bit width B of each element, that the amount of the anchor data is K=b/B, and may read x0, x1, ..., and x(K-1) from the shared data in sequence as the anchor data.

In this embodiment of this application, for a format of the shared data, refer to Table 2 for understanding. Details are shown in Table 2.

**Table 2: Format of shared data**

| Index | Shared data |
|---|---|
| 0 | x0 |
| 1 | x1 |
| 2 | x2 |
| ... | ... |
| N-1 | x(N-1) |

In Table 2, an example in which that are N pieces of shared data is used, and the N pieces of shared data may be stored in a manner in which the index corresponds to the shared data. Table 2 may be stored in both the first apparatus and the second apparatus. It is clear that Table 2 may alternatively be stored in storage space that can be accessed by both the first apparatus and the second apparatus.

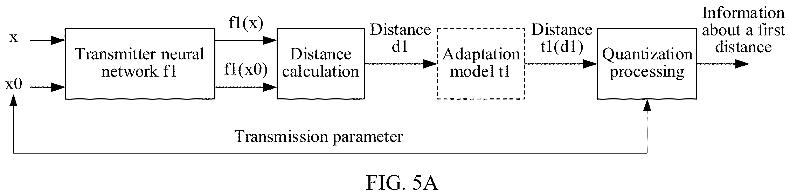

For a process of determining the information about the first distance by using the anchor data, refer to FIG. 5A for understanding. As shown in FIG. 5A, the source data is represented by (x), and the anchor data is represented by (x0). The source data (x) is processed by using the transmitter neural network f1 of the first apparatus to obtain data (f1(x)), and the anchor data (x0) is processed by using the transmitter neural network f1 of the first apparatus to obtain data (f1(x0)). Then, the first apparatus performs distance calculation on (f1(x)) and (f1(x0)) to obtain a distance d1, where d1=dist((f1(x)), (f1(x0))). It is clear that the anchor data (x0) is merely used as an example for description herein. When there are K pieces of anchor data, a first distance obtained after (f1(x)) and the K pieces of anchor data are separately processed by using the transmitter neural network f1 may be represented as d(i)=dist((fl(x)), (fl(x(i)))), where i=0, 1, ..., and K-1. For ease of description, the following still uses the anchor data (x0) as an example for description.

The first apparatus may directly perform quantization processing on the distance d1. After obtaining quantized bit data, the first apparatus sends, to the second apparatus, the quantized bit data of d1, in other words, the information about the first distance.

Alternatively, the first apparatus may first adjust the distance d1 by using the adaptation model t1, to obtain t1(d1), and then perform quantization processing on t1(d1). After obtaining quantized bit data, the first apparatus sends, to the second apparatus, the quantized bit data of t1(d1), in other words, the information about the first distance.

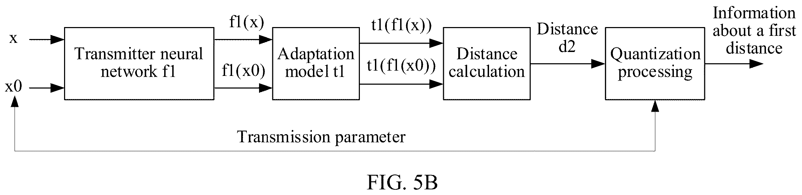

For a process of determining the information about the first distance by using the anchor data, refer to FIG. 5B for understanding. As shown in FIG. 5B, the source data is represented by (x), the anchor data is represented by (x0). The source data (x) is processed by using the transmitter neural network f1 of the first apparatus to obtain data (f1(x)), and the anchor data (x0) is processed by using the transmitter neural network f1 of the first apparatus to obtain data (f1(x0)). Then, the first apparatus processes (f1(x)) by using the adaptation model t1 to obtain (t1(f1(x))), and processes (f1(x0)) by using the adaptation model t1 to obtain (tl(fl(x0))). Then, the first apparatus performs distance calculation on (t1(f1(x))) and (tl(fl(x0))) to obtain a distance d2, where d2=dist((tl(fl(x))), (tl(fl(x0)))).

The first apparatus may directly perform quantization processing on the distance d2. After obtaining quantized bit data, the first apparatus sends, to the second apparatus, the quantized bit data of d2, in other words, the information about the first distance.

In addition, the first apparatus may alternatively determine the anchor data based on a parameter indication from the second apparatus, where the parameter indication indicates an amount of the anchor data and/or identification information of the anchor data, and the anchor data is included in the shared data. The first apparatus determines the anchor data from the shared data based on the parameter indication.

In this embodiment of this application, the anchor data used in the foregoing process is selected from the shared data. The first apparatus may further update the shared data. The update process may be that the first apparatus updates the shared data based on an update indication for the shared data. Similarly, the second apparatus may also update the shared data based on the update indication for the shared data. The update indication may be mutually sent between the first apparatus and the second apparatus, or may be sent by another apparatus to the first apparatus or the second apparatus.

The update of the shared data may include deletion and addition of a specific sample. For the update of the shared data, the update indication may be sent by using corresponding radio resource control (radio resource control, RRC) signaling, a corresponding medium access control (medium access control, MAC) control element (control element, CE), or corresponding downlink control information (downlink control information, DCI) in the communication process. For example, one bit is used to represent a delete or add operation, and other bits are used to represent a sample index and a sample value. The delete operation needs only a sample index, indicating that a corresponding sample is deleted from the shared data. After the deletion, other samples are re-indexed in sequence. For example, a sequence of a subsequent sample index is moved forward. The add operation needs an index position in which a sample is inserted and a sample value. The index position in which the sample is inserted is an index of new data, and the original index position and data following the original index position are re-indexed. For example, a sequence is moved backward. The delete and add operations may be used to replace data.

In this embodiment of this application, through management of the shared data, the anchor data may be selected by using latest shared data. This helps improve a communication effect between the first apparatus and the second apparatus.

Solution 2: The information about the first distance is determined by using the shared neural network.

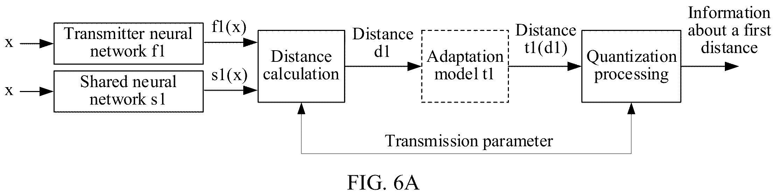

For a process of determining the information about the first distance by using the shared neural network, refer to FIG. 6A for understanding. As shown in FIG. 6A, the source data is represented by (x). The source data (x) is processed by using the transmitter neural network f1 of the first apparatus to obtain data (f1(x)), the source data (x) is processed by using the shared neural network s1 of the first apparatus to obtain data (sl(x)). Then, the first apparatus performs distance calculation on (f1(x)) and (s1(x)) to obtain a distance d1, where dl=dist((fl(x)), (s1(x))). When there are a plurality of distances d1, the first apparatus may select, based on the transmission parameter, some first distances d1 from the plurality of first distances d1 for transmission. The first apparatus may directly perform quantization processing on the distance d1. After obtaining quantized bit data, the first apparatus sends, to the second apparatus, the quantized bit data of d1, in other words, the information about the first distance.

Alternatively, the first apparatus may first adjust the first distance d1 by using the adaptation model t1, to obtain t1(d1), and then perform quantization processing on t1(d1). After obtaining quantized bit data, the first apparatus sends, to the second apparatus, the quantized bit data of t1(d1), in other words, the information about the first distance.

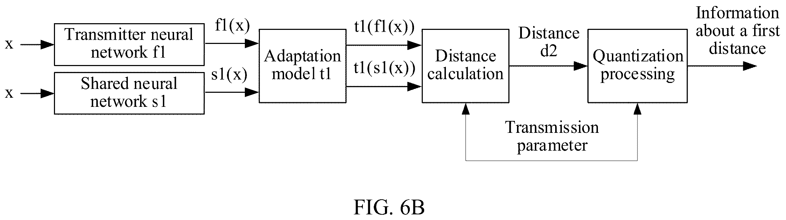

For a process of determining the information about the first distance by using the shared neural network, refer to FIG. 6B for understanding. As shown in FIG. 6B, the source data is represented by (x). The source data (x) is processed by using the transmitter neural network f1 of the first apparatus to obtain data (f1(x)), the source data (x) is processed by using the shared neural network s1 of the first apparatus to obtain data (sl(x)). Then, the first apparatus processes (f1(x)) by using the adaptation model t1 to obtain (t1(f1(x))), and processes (sl(x)) by using the adaptation model t1 to obtain (t1(s1(x))). Then, the first apparatus performs distance calculation on (t1(f1(x))) and (t1(s1(x))) to obtain a distance d2, where d2=dist((tl(fl(x))), (tl(sl(x)))).

The first apparatus may directly perform quantization processing on the distance d2. After obtaining quantized bit data, the first apparatus sends, to the second apparatus, the quantized bit data of d2, in other words, the information about the first distance.

The foregoing describes the process of determining the information about the first distance. The following describes a process of restoring the source data by the second apparatus by using the information about the first distance.

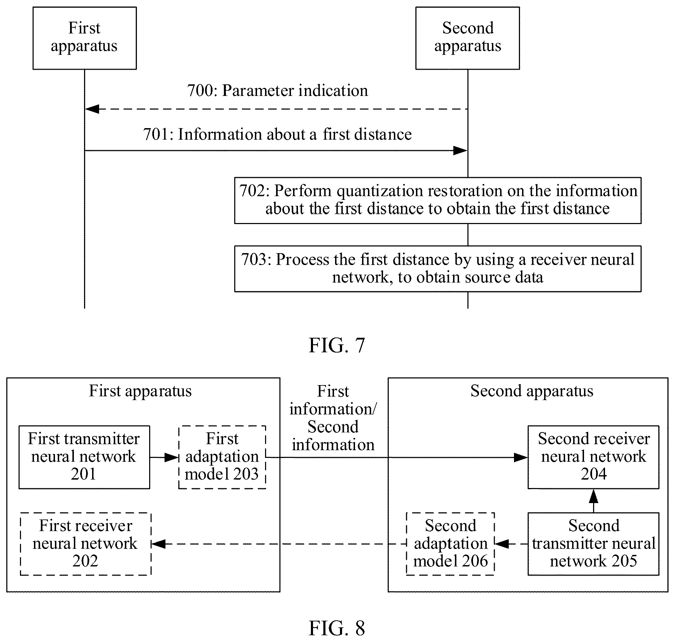

When the anchor data is used to determine the information about the first distance, for the process of restoring the source data by the second apparatus, refer to FIG. 7 for understanding. As shown in FIG. 7, the process includes the following steps.

701: The second apparatus receives the information about the first distance from the first apparatus.

The information about the first distance may be quantized information of the first distance.

702: The second apparatus performs quantization restoration on the information about the first distance to obtain the first distance.

703: The second apparatus processes the first distance by using the receiver neural network, to obtain the source data.

In this embodiment of this application, the first apparatus and the second apparatus use the shared data

(where the anchor data is a part of the shared data) when training the transmitter neural network and the receiver neural network. Therefore, in the communication process, after the first apparatus obtains the first distance by using the anchor data, the second apparatus may directly restore the source data after receiving the first distance.

For more flexible communication, the second apparatus may further perform the following step 700.

700: The second apparatus sends the parameter indication to the first apparatus. Correspondingly, the first apparatus receives the parameter indication from the second apparatus.

The parameter indication indicates the amount of the anchor data and/or the identification information of the anchor data. The first apparatus determines the anchor data from the shared data based on the parameter indication, where the second data is obtained after the anchor data is processed by using the transmitter neural network of the first apparatus.

In the communication process between the first apparatus and the second apparatus described above, the first apparatus sends the information about the first distance to the second apparatus. Actually, the first apparatus may not send a distance to the second apparatus for communication, but directly send information about data processed by using the transmitter neural network of the first apparatus or information about data further processed by using the adaptation model. For a communication system in this case, refer to FIG. 8 for understanding.

For the communication system shown in FIG. 8, refer to the communication system shown in FIG. 2 for understanding. A difference lies in that in the communication system shown in FIG. 2, the information about the first distance or information about the second distance sent by the first apparatus may be directly restored by the receiver neural network of the second apparatus. However, in the communication system shown in FIG. 8, to be normally received by the receiver neural network of the second apparatus, information about the first data sent by the first apparatus needs to be processed with the assistance of the transmitter neural network of the second apparatus.

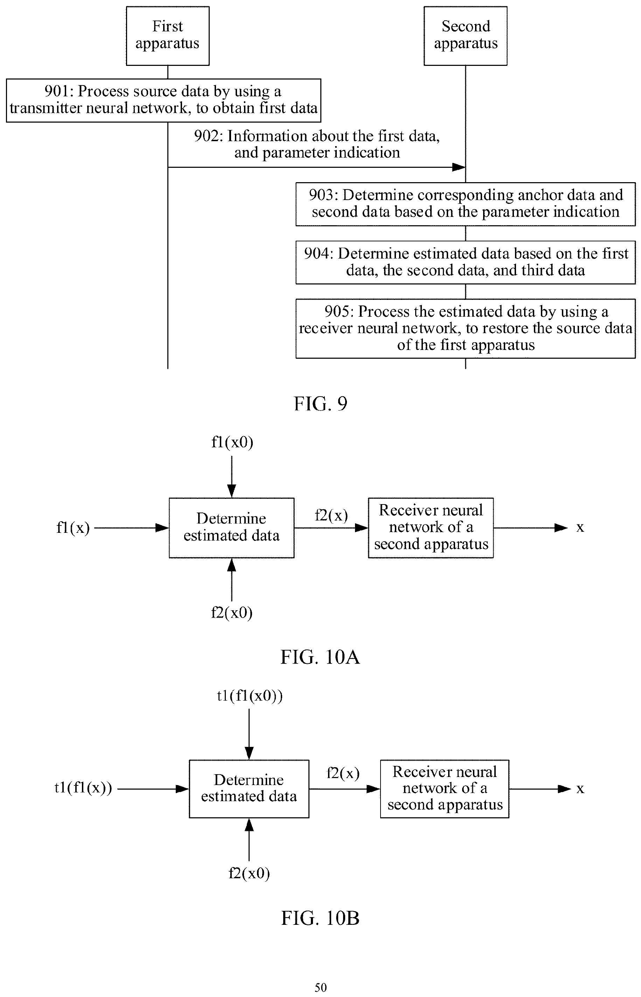

For a data processing process related in a communication process of the communication system with the structure shown in FIG. 8, refer to FIG. 9 for understanding.

As shown in FIG. 9, another embodiment of a data processing method according to an embodiment of this application includes the following steps.

901: A first apparatus processes source data by using a transmitter neural network, to obtain first data.

902: The first apparatus sends information about the first data and a parameter indication to a second apparatus. Correspondingly, the second apparatus receives the information about the first data and the parameter indication from the first apparatus.

The parameter indication indicates an amount of anchor data and/or identification information of the anchor data, and the anchor data is included in shared data. For the parameter indication and the anchor data, refer to the foregoing descriptions for understanding.

The information about the first data may be information obtained after quantization processing is performed on the first data (f1(x)). Alternatively, the information about the first data is information about data obtained after the first data is processed by using an adaptation model, and the adaptation model is obtained by the first apparatus and the second apparatus through collaborative training based on a third training target or a fourth training target, where the third training target indicates to reduce an absolute value of a difference between a first signal and a second signal, the first signal is data obtained after first sample data is processed by using the transmitter neural network of the first apparatus and the adaptation model, and the second signal is data obtained after the first sample data is processed by using a transmitter neural network of the second apparatus; and the fourth training target indicates to reduce an absolute value of a difference between data restored after a receiver neural network of the second apparatus processes the first signal and the first sample data.

In this application, if the first sample data is represented as (x1), the first signal may be represented as (t1(f1(x1))), the second signal may be represented as (f2(x1)), and the data restored after the receiver neural network of the second apparatus processes the first signal may be represented as g2(t1(f1(x1))). The third training target is to enable (t1(f1(x1))) to be as close as possible to (f2(xl)), in other words, (t1(f1(x1)))≈(f2(x1)). The fourth training target is to enable g2(t1(f1(x1))) to be as close as possible to x1, in other words, g2(t1(f1(x1)))≈x1.

903: The second apparatus determines the corresponding anchor data and second data based on the parameter indication.

The second data is data obtained after the anchor data is processed by using the transmitter neural network of the first apparatus.

Optionally, the second apparatus receives the anchor data and the second data that are from the first apparatus, and the second apparatus establishes a correspondence between the anchor data and the second data. Alternatively, the second apparatus may alternatively generate (f2(x0)) in advance based on the anchor data (x0), and establish a correspondence between (x0) and (fl(x0)) or (t1(f1(x0))), and (f2(x0)). In this way, after (x0) is determined based on the parameter indication, (f1(x0)) or (tl(fl(x0))) and (f2(x0)) may be determined based on the correspondence, and then estimated data of (f2(x)) may be obtained through estimation with reference to (f1(x)) or (t1(f1(x))). In this way, efficiency of estimating (f2(x)) can be improved.

904: The second apparatus determines the estimated data based on the first data, the second data, and third data.

The third data is data obtained after the anchor data is processed by using the transmitter neural network of the second apparatus.

In this application, the source data may be represented as (x), the first data may be represented as (f1(x)), and the data obtained after the first data is processed by using the adaptation model may be represented as (t1(f1(x))). The anchor data may be represented as (x0), the data obtained after the anchor data is processed by using the transmitter neural network of the first apparatus is represented as (f1(x0)), data obtained after the anchor data is further processed by using the adaptation model may be represented as (t1(f1(x0))), the data obtained after the anchor data is processed by using the transmitter neural network of the second apparatus may be represented as (f2(x0)), and data obtained after the source data is processed by using the transmitter neural network of the second apparatus may be represented as (f2(x)).

In this application, the second apparatus may obtain the estimated data of (f2(x)) through estimation by using (f1(x)), (f1(x0)), and (f2(x0)). Alternatively, the second apparatus may obtain the estimated number of (f2(x)) through estimation by using (t1(f1(x))), (tl(fl(x0))), and (f2(x0)). In this embodiment of this application, the estimated data may also be considered as (f2(x)).

Optionally, an estimation condition of the estimated data is that a distance of the first data relative to the second data is equal to a distance of the estimated data relative to the third data. The estimation condition may be represented as d((f1(x)), (fl(x0)))=d((f2(x)), (f2(x0))), or may be represented as d((t1(f1(x))), (tl(fl(x0))))=d((f2(x)),(f2(x0))). In this way, after the three pieces of data (f1(x)), (f1(x0)), and (f2(x0)) are known, (f2(x)) can be estimated. Alternatively, after the three pieces of data (t1(f1(x))), (tl(fl(x0))), and (f2(x0)) are known, (f2(x)) can be estimated.

905: The second apparatus processes the estimated data by using the receiver neural network, to restore the source data of the first apparatus.

For processes of step 904 and step 905, refer to FIG. 10A or FIG. 10B for understanding.

As shown in FIG. 10A, the second apparatus obtains (f2(x)) through estimation based on (f1(x)), (f1(x0)), and (f2(x0)) and according to the foregoing estimation condition d((f1(x)), (f1(x0)))=d((f2(x)), (f2(x0))), and then the receiver neural network of the second apparatus receives (f2(x)) to obtain the source data x.

As shown in FIG. 10B, the second apparatus obtains (f2(x)) through estimation based on (t1(f1(x))), (t1(f1(x0))), and (f2(x0)) and according to the foregoing estimation condition d((t1(f1(x))), (tl(fl(x0))))=d((f2(x)),(f2(x0))), and then the receiver neural network of the second apparatus receives (f2(x)) to obtain the source data x.

In this application, the second apparatus first obtains (f2(x)) through estimation, and then the receiver neural network of the second apparatus performs receiving processing on (f2(x)). The transmitter neural network and the receiver neural network of the second apparatus are obtained through joint training. Therefore, the receiver neural network of the second apparatus may correctly receive (f2(x)), to implement adaptive communication between the first apparatus and the second apparatus.

In addition, in the solution described in FIG. 9, for management of the shared data, selection of the anchor data, a training process of the sending/receiver neural network of the first apparatus, and a training process of the sending/receiver neural network of the second apparatus, refer to the foregoing content for understanding.

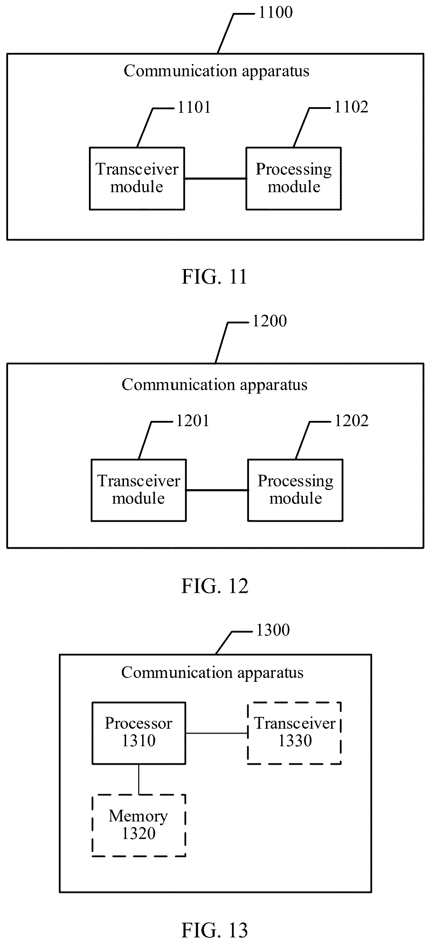

The foregoing describes the data processing method. The following describes a communication apparatus provided in embodiments of this application. FIG. 11 is a diagram of a structure of a communication apparatus according to an embodiment of this application. The communication apparatus 1100 may be configured to perform a step performed by the first apparatus in embodiments shown in FIG. 2 to FIG. 10B. For details, refer to related descriptions in the foregoing method embodiments.

The communication apparatus 1100 includes a transceiver module 1101 and a processing module 1102. The transceiver module 1101 may implement a corresponding communication function. The processing module 1102 is configured to process data. The transceiver module 1101 may also be referred to as a communication interface or a communication unit.

Optionally, the communication apparatus 1100 may further include a storage unit. The storage unit may be configured to store instructions and/or data. The processing module 1102 may read the instructions and/or the data in the storage unit, so that the communication apparatus implements the foregoing method embodiments.

The communication apparatus 1100 may be configured to perform an action performed by the first apparatus in the foregoing method embodiments. The communication apparatus 1100 may be the first apparatus or a component that can be configured in the first apparatus. The transceiver module 1101 is configured to perform a receiving/sending-related operation on a side of the first apparatus in the foregoing method embodiments. The processing module 1102 is configured to perform a processing-related operation on the side of the first apparatus in the foregoing method embodiments.

Optionally, the transceiver module 1101 may include a sending module and a receiving module. The sending module is configured to perform a sending operation in the foregoing method embodiments. The receiving module is configured to perform a receiving operation in the foregoing method embodiments.

It should be noted that the communication apparatus 1100 may include the sending module but not include the receiving module. Alternatively, the communication apparatus 1100 may include the receiving module but not include the sending module. This may be specifically determined depending on whether the foregoing solutions performed by the communication apparatus 1100 include a sending action and a receiving action.

For example, the communication apparatus 1100 is configured to perform an action performed by the first apparatus in the foregoing embodiment shown in FIG. 3.

The processing module 1102 is configured to obtain first data and second data, where the first data is data obtained after to-be-sent source data is processed by using a transmitter neural network of the first apparatus, and the second data is data that has a reference function for the first data.

The transceiver module 1101 is configured to send information about a first distance to a second apparatus, where the first distance is obtained by using the first data and the second data, and the first distance is used by the second apparatus to restore the source data.

Optionally, the transceiver module 1101 is further configured to receive a parameter indication from the second apparatus, where the parameter indication indicates an amount of anchor data and/or identification information of the anchor data, and the anchor data is included in shared data.

The processing module 1102 is further configured to determine the anchor data from the shared data based on the parameter indication, where the second data is obtained after the anchor data is processed by using the transmitter neural network of the first apparatus.

It should be understood that a specific process in which the modules perform the foregoing corresponding steps is described in detail in the foregoing method embodiments. For brevity, details are not described herein.

The processing module 1102 in the foregoing embodiment may be implemented by at least one processor or processor-related circuit. The transceiver module 1101 may be implemented by a transceiver or a transceiver-related circuit. The transceiver module 1101 may also be referred to as a communication unit or a communication interface. The storage unit may be implemented by at least one memory.

The following describes a communication apparatus provided in embodiments of this application. FIG. 12 is a diagram of a structure of a communication apparatus according to an embodiment of this application. The communication apparatus 1200 may be configured to perform a step performed by the second apparatus in embodiments shown in FIG. 2 to FIG. 10B. For details, refer to related descriptions in the foregoing method embodiments.

The communication apparatus 1200 includes a transceiver module 1201. Optionally, the communication apparatus 1200 further includes a processing module 1202. The transceiver module 1201 may implement a corresponding communication function. The processing module 1202 is configured to process data. The transceiver module 1201 may also be referred to as a communication interface or a communication unit.

The communication apparatus 1200 may be configured to perform an action performed by the second apparatus in the foregoing method embodiments. The communication apparatus 1200 may be the second apparatus or a component that can be configured in the second apparatus. The transceiver module 1201 is configured to perform a receiving-related operation on a side of the second apparatus in the foregoing method embodiments.

Optionally, the transceiver module 1201 may include a sending module and a receiving module. The sending module is configured to perform a sending operation in the foregoing method embodiments. The receiving module is configured to perform a receiving operation in the foregoing method embodiments.

It should be noted that the communication apparatus 1200 may include the sending module but not include the receiving module. Alternatively, the communication apparatus 1200 may include the receiving module but not include the sending module. This may be specifically determined depending on whether the foregoing solutions performed by the communication apparatus 1200 include a sending action and a receiving action.

For example, the communication apparatus 1200 is configured to perform an action performed by the second apparatus in the foregoing embodiment shown in FIG. 2.

The transceiver module 1201 is configured to receive information about a first distance from a first apparatus, where the first distance is obtained by using first data and second data, the first data is data obtained after source data of the first apparatus is processed by using a transmitter neural network, and the second data is data that has a reference function for the first data.

The processing module 1202 is configured to restore source data from the first distance by using a receiver neural network.

Optionally, the transceiver module 1201 is further configured to send a parameter indication to the first apparatus, where the parameter indication indicates an amount of anchor data and/or identification information of the anchor data, and the anchor data is used by the first apparatus to determine the second data.

It should be understood that a specific process in which the modules perform the foregoing corresponding steps is described in detail in the foregoing method embodiments. For brevity, details are not described herein.

The processing module 1202 in the foregoing embodiment may be implemented by at least one processor or processor-related circuit. The transceiver module 1201 may be implemented by a transceiver or a transceiver-related circuit. The transceiver module 1201 may also be referred to as a communication unit or a communication interface. The storage unit may be implemented by at least one memory.

An embodiment of this application further provides a communication apparatus 1300. The communication apparatus 1300 includes a processor 1310. The processor 1310 is coupled to a memory 1320. The memory 1320 is configured to store a computer program or instructions and/or data. The processor 1310 is configured to execute the computer program or the instructions and/or the data stored in the memory 1320, to enable the methods in the foregoing method embodiments to be performed.

Optionally, the communication apparatus 1300 includes one or more processors 1310.

Optionally, as shown in FIG. 13, the communication apparatus 1300 may further include the memory 1320.

Optionally, the communication apparatus 1300 may include one or more memories 1320.

Optionally, the memory 1320 and the processor 1310 may be integrated, or disposed separately.

Optionally, as shown in FIG. 13, the communication apparatus 1300 may further include a transceiver 1330. The transceiver 1330 is configured to receive and/or send a signal. For example, the processor 1310 is configured to control the transceiver 1330 to receive and/or send a signal.

In a solution, the communication apparatus 1300 is configured to implement an operation performed by the first apparatus in the foregoing method embodiments.

For example, the processor 1310 is configured to implement a processing-related operation performed by the first apparatus in the foregoing method embodiments, and the transceiver 1330 is configured to implement receiving and sending-related operations performed by the first apparatus in the foregoing method embodiments.

In another solution, the communication apparatus 1300 is configured to implement an operation performed by the second apparatus in the foregoing method embodiments.

For example, the processor 1310 is configured to implement a processing-related operation performed by the second apparatus in the foregoing method embodiments, and the transceiver 1330 is configured to implement receiving and sending-related operations performed by the second apparatus in the foregoing method embodiments.

An embodiment of this application further provides a communication apparatus 1400. The communication apparatus 1400 may be a first apparatus/a second apparatus, or may be a chip in the first apparatus/the second apparatus. The communication apparatus 1400 may be configured to perform an operation performed by the first apparatus/the second apparatus in the foregoing method embodiments.

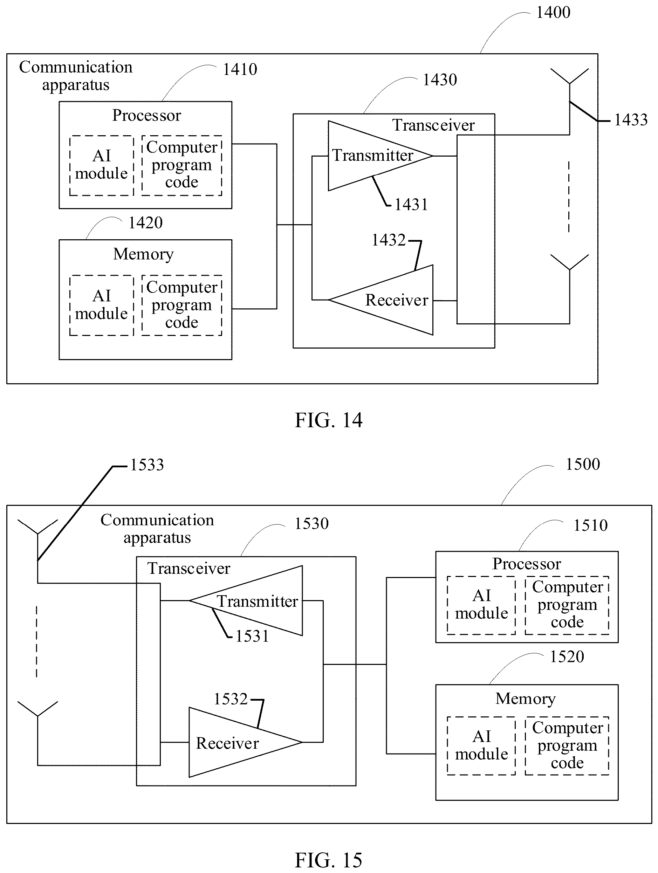

When the communication apparatus 1400 is the first apparatus/the second apparatus, FIG. 14 is a diagram of a simplified structure of the first apparatus/the second apparatus. As shown in FIG. 14, the first apparatus/the second apparatus includes a processor, a memory, and a transceiver. The memory and/or the processor may store computer program code and an AI module, and the AI module is configured to implement an AI-related function. The AI module may be implemented by using software, hardware, or a combination of the software and the hardware. For example, the AI module may include an RIC module. For example, the AI module may be a near-real-time access network intelligent controller (ran intelligent controller, RIC) or a non-real-time RIC. The transceiver includes a transmitter 1431, a receiver 1432, a radio frequency circuit (not shown in the figure), an antenna 1433, and an input/output apparatus (not shown in the figure). The processor is mainly configured to: process a communication protocol and communication data, control the first apparatus/the second apparatus, execute a software program, process data of the software program, and the like. The memory is mainly configured to store the software program and the data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user. It should be noted that some types of first apparatuses/second apparatuses may not have the input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the first apparatus/the second apparatus, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 14 shows only one memory, one processor, and one transceiver. In an actual first apparatus/second apparatus product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have a transceiver function may be considered as a transceiver unit of the first apparatus/the second apparatus, and the processor that has a processing function may be considered as a processing unit of the first apparatus/the second apparatus.

As shown in FIG. 14, the first apparatus/the second apparatus includes a processor 1410, a memory 1420, and a transceiver 1430. The processor 1410 may also be referred to as a processing unit, a processing board, a processing module, a processing apparatus, or the like. The transceiver 1430 may also be referred to as a transceiver unit, a transceiver machine, a transceiver apparatus, or the like.

Optionally, a component configured to implement a receiving function in the transceiver 1430 may be considered as a receiving unit, and a component configured to implement a sending function in the transceiver 1430 may be considered as a sending unit. That is, the transceiver 1430 includes a receiver machine and a transmitter machine. The transceiver sometimes may also be referred to as a transceiver machine, a transceiver unit, a transceiver circuit, or the like. The receiver machine sometimes may also be referred to as a receiver, a receiving unit, a receiving circuit, or the like. The transmitter machine sometimes may also be referred to as a transmitter, a sending unit, a transmitting circuit, or the like.

For example, in an implementation, the processor 1410 is configured to perform a processing action on a side of the first apparatus/the second apparatus in the embodiment shown in FIG. 3, and the transceiver 1430 is configured to perform receiving and sending actions on the side of the first apparatus/the second apparatus in FIG. 3. For example, the transceiver 1430 is configured to perform the receiving and sending operations in step 302 in the embodiment shown in FIG. 3. The processor 1410 is configured to perform the processing operation in step 303 in the embodiment shown in FIG. 3.

It should be understood that FIG. 14 is merely an example rather than a limitation. The foregoing first apparatus/second apparatus including the transceiver unit and the processing unit may not depend on the structure shown in FIG. 14.

When the communication apparatus 1400 is a chip, the chip includes a processor and a transceiver. The transceiver may be an input/output circuit or a communication interface. The processor may be a processing unit, a microprocessor, or an integrated circuit integrated on the chip. A sending operation of the first apparatus/the second apparatus in the foregoing method embodiments may be understood as an output of the chip, and a receiving operation of the first apparatus/the second apparatus in the foregoing method embodiments may be understood as an input of the chip.

An embodiment of this application further provides a communication apparatus 1500. The communication apparatus 1500 may be a first apparatus/a second apparatus, or may be a chip. The communication apparatus 1500 may be configured to perform an operation performed by the first apparatus/the second apparatus in the foregoing method embodiments.

When the communication apparatus 1500 is the first apparatus/the second apparatus, for example, a base station, FIG. 15 is a diagram of a simplified structure of the base station. The base station includes a part 1510, a part 1520, and a part 1530. The part 1510 is mainly configured to: perform baseband processing, control the base station, and the like. The part 1510 is usually a control center of the base station, may be usually referred to as a processor, and is configured to control the base station to perform a processing operation on a side of the first apparatus/the second apparatus in the foregoing method embodiments. The part 1520 is mainly configured to store computer program code and an AI module. The AI module is configured to implement an AI-related function. The AI module may be implemented by using software, hardware, or a combination of the software and the hardware. For example, the AI module may include an RIC module. For example, the AI module may be a near-real-time RIC or a non-real-time RIC. The part 1530 is mainly configured to receive and send a radio frequency signal, and perform conversion between the radio frequency signal and a baseband signal. The part 1530 may be usually referred to as a transceiver unit, a transceiver machine, a transceiver circuit, a transceiver, or the like. A transceiver unit in the part 1530 may also be referred to as a transceiver machine, a transceiver, or the like, and includes an antenna 1533 and a radio frequency circuit (not shown in the figure). The radio frequency circuit is mainly configured to perform radio frequency processing. Optionally, a component that is configured to implement a receiving function and that is in the part 1530 may be considered as a receiver, and a component that is configured to implement a sending function and that is in the part 1530 may be considered as a transmitter. That is, the part 1530 includes a receiver 1532 and a transmitter 1531. The receiver may also be referred to as a receiving unit, a receiver machine, a receiving circuit, or the like, and the transmitter may be referred to as a sending unit, a transmitter machine, a transmitting circuit, or the like.

The part 1510 and the part 1520 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, in an implementation, the transceiver unit in the part 1530 is configured to perform receiving and sending-related steps performed by the first apparatus/the second apparatus in the embodiment shown in FIG. 3. The processor in the part 1510 is configured to perform a processing-related step performed by the first apparatus/the second apparatus in the embodiment shown in FIG. 3.

It should be understood that FIG. 15 is merely an example rather than a limitation. The first apparatus/the second apparatus including the processor, the memory, and the transceiver may not depend on the structure shown in FIG. 15.

When the communication apparatus 1500 is a chip, the chip includes a transceiver, a memory, and a processor. The transceiver may be an input/output circuit or a communication interface. The processor is a processor, a microprocessor, or an integrated circuit integrated on the chip. A sending operation of the first apparatus/the second apparatus in the foregoing method embodiments may be understood as an output of the chip, and a receiving operation of the first apparatus/the second apparatus in the foregoing method embodiments may be understood as an input of the chip.

An embodiment of this application further provides a computer-readable storage medium. The computer-readable storage medium stores computer instructions used to implement the method performed by the first apparatus or the method performed by the second apparatus in the foregoing method embodiments.

For example, when a computer program is executed by a computer, the computer is enabled to implement the method performed by the first apparatus or the method performed by the second apparatus in the foregoing method embodiments.

An embodiment of this application further provides a computer program product including instructions. When the instructions are executed by a computer, the computer is enabled to implement the method performed by the first apparatus or the method performed by the second apparatus in the foregoing method embodiments.

An embodiment of this application further provides a communication system. The communication system includes the second apparatus and the first apparatus in the foregoing embodiments.

An embodiment of this application further provides a chip apparatus including a processor, configured to invoke a computer program or computer instructions stored in a memory, to enable the processor to perform the methods in the embodiments shown in FIG. 3 to FIG. 10B.

In a possible implementation, an input of the chip apparatus corresponds to a receiving operation in the embodiments shown in FIG. 3 to FIG. 10B, and an output of the chip apparatus corresponds to a sending operation in the embodiments shown in FIG. 3 to FIG. 10B.

Optionally, the processor is coupled to the memory through an interface.

Optionally, the chip apparatus further includes the memory. The memory stores the computer program or the computer instructions.

The processor mentioned in any one of the foregoing descriptions may be a general-purpose central processing unit, a microprocessor, an application-specific integrated circuit (application-specific integrated circuit, ASIC), or one or more integrated circuits configured to control program execution of the methods in the embodiments shown in FIG. 3 to FIG. 10B. The memory mentioned in any one of the foregoing may be a read-only memory (read-only memory, ROM), another type of static storage device that can store static information and instructions, a random access memory (random access memory, RAM), or the like.

It may be clearly understood by a person skilled in the art that, for convenient and brief description, for explanations and beneficial effects of related content in any one of the communication apparatuses provided above, refer to the corresponding method embodiment provided above. Details are not described herein again.

In embodiments of this application, the terminal device or the network device may include a hardware layer, an operating system layer running on the hardware layer, and an application layer running on the operating system layer. The hardware layer may include hardware such as a central processing unit (central processing unit, CPU), a memory management unit (memory management unit, MMU), and memory (also referred to as main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, the part contributing, or all or a part of the technical solutions may be implemented in a form of a software product. The computer software product is stored in a storage medium, and includes several instructions for instructing a computer device (which may be a personal computer, a server, or a network device) to perform all or a part of the steps of the methods in embodiments of this application. The foregoing storage medium includes: any medium that can store program code, for example, a USB flash disk, a removable hard disk, a read-only memory, a random access memory, a magnetic disk, or an optical disc.

## Claims

1. A data processing method, comprising:
obtaining, by a first apparatus, first data and second data, wherein the first data is data obtained after to-be-sent source data is processed by using a transmitter neural network of the first apparatus, and the second data is data that has a reference function for the first data; and
sending, by the first apparatus, information about a first distance to a second apparatus, wherein the first distance is obtained by using the first data and the second data, and the first distance is used by the second apparatus to restore the source data.

2. The method according to claim 1, wherein the first distance is a distance between the first data and the second data.

3. The method according to claim 1, wherein the first distance is a distance between data obtained after the first data and the second data are separately processed by using an adaptation model, and the adaptation model is obtained by the first apparatus and the second apparatus through collaborative training based on a first training target or a second training target, wherein
the first training target indicates to reduce an absolute value of a difference between a second distance and a third distance, wherein the second distance is a distance between data obtained after first sample data and second sample data both are separately processed by using the transmitter neural network of the first apparatus and the adaptation model, and the third distance is a distance between data obtained after the first sample data and the second sample data are separately processed by using a transmitter neural network of the second apparatus; or
the second distance is a distance between data obtained after first sample data is processed by using the transmitter neural network of the first apparatus and the adaptation model and data obtained after the first sample data is processed by using a shared neural network and the adaptation model, and the third distance is a distance between data obtained after the first sample data is processed by using a transmitter neural network of the second apparatus and data obtained after the first sample data is processed by using the shared neural network; and
the second training target indicates to reduce an absolute value of a difference between restored data and the first sample data, wherein the restored data is data restored after a receiver neural network of the second apparatus processes the second distance.

4. The method according to any one of claims 1 to 3, wherein before the obtaining, by the first apparatus, the first data and the second data, the method further comprises:
receiving, by the first apparatus, a parameter indication from the second apparatus, wherein the parameter indication indicates an amount of anchor data and/or identification information of the anchor data, and the anchor data is comprised in shared data; and
determining, by the first apparatus, the anchor data from the shared data based on the parameter indication, wherein the second data is obtained after the anchor data is processed by using the transmitter neural network of the first apparatus.

5. The method according to any one of claims 1 to 3, wherein before the obtaining, by the first apparatus, the first data and the second data, the method further comprises:
determining, by the first apparatus, anchor data from shared data based on a transmission parameter, wherein the second data is obtained after the anchor data is processed by using the transmitter neural network of the first apparatus, and the transmission parameter is used to determine an amount of the anchor data.

6. The method according to claim 4 or 5, wherein the method further comprises:
updating, by the first apparatus, the shared data based on an update indication for the shared data.

7. The method according to any one of claims 4 to 6, wherein the shared data is used to train the transmitter neural network of the first apparatus.

8. The method according to any one of claims 1 to 3, wherein the second data is data obtained after the source data is processed by using the shared neural network.

9. The method according to any one of claims 1 to 8, wherein
the information about the first distance is information obtained after quantization processing is performed on one or more first distances.

10. A data processing method, comprising:
receiving, by a second apparatus, information about a first distance from a first apparatus, wherein the first distance is obtained by using first data and second data, the first data is data obtained after source data of the first apparatus is processed by using a transmitter neural network, and the second data is data that has a reference function for the first data; and
restoring, by the second apparatus, the source data from the first distance by using a receiver neural network.

11. The method according to claim 10, wherein the method further comprises:
sending, by the second apparatus, a parameter indication to the first apparatus, wherein the parameter indication indicates an amount of anchor data and/or identification information of the anchor data, the anchor data is comprised in shared data, and the anchor data is used by the first apparatus to determine the second data.

12. The method according to claim 11, wherein the method further comprises:
updating, by the second apparatus, the shared data based on an update indication for the shared data.

13. The method according to claim 11 or 12, wherein the shared data is used to train the receiver neural network of the second apparatus.

14. A data processing method, comprising:
processing, by a first apparatus, source data by using a transmitter neural network, to obtain first data; and
sending, by the first apparatus, information about the first data and a parameter indication to a second apparatus, wherein the parameter indication indicates an amount of anchor data and/or identification information of the anchor data, the anchor data is comprised in shared data, the anchor data and the first data are used by the second apparatus to determine estimated data, and the estimated data is used by a receiver neural network of the second apparatus to restore the source data of the first apparatus.

15. The method according to claim 14, wherein the information about the first data is information about data obtained after the first data is processed by using an adaptation model, and the adaptation model is obtained by the first apparatus and the second apparatus through collaborative training based on a third training target or a fourth training target, wherein the third training target indicates to reduce an absolute value of a difference between a first signal and a second signal, the first signal is data obtained after first sample data is processed by using the transmitter neural network of the first apparatus and the adaptation model, and the second signal is data obtained after the first sample data is processed by using a transmitter neural network of the second apparatus; and the fourth training target indicates to reduce an absolute value of a difference between data restored after the receiver neural network of the second apparatus processes the first signal and the first sample data.

16. The method according to claim 14 or 15, wherein the method further comprises:
determining, by the first apparatus, the anchor data from the shared data based on a transmission parameter, wherein the second data is obtained after the anchor data is processed by using the transmitter neural network of the first apparatus, and the transmission parameter is used to determine the amount of the anchor data; and
sending, by the first apparatus, the anchor data and the second data to the second apparatus, wherein the second data is used by the second apparatus to determine the estimated data.

17. The method according to any one of claims 14 to 16, wherein the method further comprises:
updating, by the first apparatus, the shared data based on an update indication for the shared data.

18. A data processing method, comprising:
receiving, by a second apparatus, information about first data and a parameter indication from a first apparatus, wherein the parameter indication indicates an amount of anchor data and/or identification information of the anchor data, and the anchor data is comprised in shared data;
determining, by the second apparatus, the corresponding anchor data and second data based on the parameter indication, wherein the second data is data obtained after the anchor data is processed by using a transmitter neural network of the first apparatus; and
determining, by the second apparatus, estimated data based on the first data, the second data, and third data, and processing the estimated data by using a receiver neural network of the second apparatus, to restore source data of the first apparatus, wherein the third data is data obtained after the anchor data is processed by using a transmitter neural network of the second apparatus.

19. The method according to claim 18, wherein the determining, by the second apparatus, the corresponding anchor data and the second data based on the parameter indication comprises:
determining, by the second apparatus, the anchor data from the shared data based on the parameter indication; and
determining, by the second apparatus based on a correspondence between the anchor data and the second data, the second data corresponding to the anchor data.

20. The method according to claim 18 or 19, wherein an estimation condition of the estimated data is that a distance of the first data relative to the second data is equal to a distance of the estimated data relative to the third data.

21. The method according to any one of claims 18 to 20, wherein before the receiving, by the second apparatus, the information about the first data and the parameter indication from the first apparatus, the method further comprises:
receiving, by the second apparatus, the anchor data and the second data from the first apparatus; and
establishing, by the second apparatus, the correspondence between the anchor data and the second data.

22. The method according to any one of claims 18 to 21, wherein the method further comprises:
updating, by the second apparatus, the shared data based on an update indication for the shared data.

23. A communication apparatus, comprising a transceiver module and a processing module, wherein
the transceiver module is configured to perform a sending step or a receiving step in the method according to any one of claims 1 to 22; and
the processing module is configured to perform a step other than the sending step and the receiving step in the method according to any one of claims 1 to 22.

24. A communication apparatus, comprising at least one processor, coupled to a memory, wherein
the memory is configured to store a program or instructions; and
the at least one processor is configured to execute the program or the instructions, to enable the apparatus to implement the method according to any one of claims 1 to 22.

25. A computer program product comprising program instructions, wherein when the program instructions are run on a computer, the computer is enabled to perform the method according to any one of claims 1 to 22.

26. A computer-readable storage medium, wherein the computer-readable storage medium stores program instructions, and when the program instructions are run, the method according to any one of claims 1 to 22 is performed.

27. A communication system, comprising a first apparatus and a second apparatus, wherein the first apparatus is configured to perform the method according to any one of claims 1 to 9, and the second apparatus is configured to perform the method according to any one of claims 10 to 13.

28. A communication system, comprising a first apparatus and a second apparatus, wherein the first apparatus is configured to perform the method according to any one of claims 14 to 17, and the second apparatus is configured to perform the method according to any one of claims 18 to 22.
